# EUROPEAN PATENT APPLICATION

(11) **EP 4 832 420 A1**
(43) Date of publication of application: **28.10.2026**
(21) Application number: 26172750.7
(22) Date of filing: 16.04.2026
(51) Int. Cl.: H04L 9/40, G06F 21/57

(54) **MULTI-AGENT COORDINATION IN NETWORK PENETRATION TESTING**

(30) Priority: 25.04.2025 US 202519190415; 12.01.2026 US 202619446796
(71) Applicant: Horizon 3 AI, Inc., Dover, Delaware 19901 (US)
(72) Inventor: BASS, John Samuel, Dover, DE 19901 (US); SUNKAVALLY, Naveen Naga, Dover, DE 19901 (US); PILLITIERE, Anthony, Dover, DE 19901 (US); ALDERMAN, Robert George, Dover, DE 19901 (US); GOYETTE, Robert, Dover, DE 19901 (US); ANTANI, Snehal, Dover, DE 19901 (US)
(74) Representative: Patentship Patentanwaltsgesellschaft mbH

(57) **Abstract**

Multiple autonomous pentesting agents (105-a~105-c) may collaborate during an autonomous pentest of a network (110). A first autonomous pentesting agent (105-a) of the multiple autonomous pentesting agents (105-a~105-c) may execute one or more first autonomous pentesting operations during the autonomous pentest of the network (110). A second autonomous pentesting agent (105-b) of the multiple autonomous pentesting agents (105-a~105-c) may execute one or more second autonomous pentesting operations during the autonomous pentest of the network (110) and at least partially overlapping in time with the one or more first autonomous pentesting operations. The first autonomous pentesting agent (105-a) may output, during the autonomous pentest of the network (110), network information obtained from the one or more first autonomous pentesting operations. The second autonomous pentesting agent (105-b) may execute, during the autonomous pentest, one or more third autonomous pentesting operations that are based on the network information.

## Description

### BACKGROUND

In networking, penetration testing or "pentesting" refers to conducting security operations that simulate a cybersecurity attack in order to identify vulnerabilities in a network. The goal of pentesting is to mimic the actions of a malicious actor and discover loopholes or other vulnerabilities before they can be exploited. Pentesting may include techniques such as scanning for vulnerabilities, testing system configurations and security protocols, and attempting controlled attacks to evaluate defense mechanisms within a network. Network administrators can remediate vulnerabilities uncovered during pentesting to prevent malicious actors from compromising network security using those vulnerabilities. Practicing regular pentesting can aid in maintaining high security standards, protecting sensitive data, and ensuring the continuity of network services.

### SUMMARY

The described techniques relate to improved methods, systems, devices, and apparatuses that support multi-agent coordination in autonomous pentesting.

In some aspects, the techniques described herein relate to a method for autonomous pentesting of a network, including: executing, by a first autonomous pentesting agent of a plurality of autonomous pentesting agents, one or more first autonomous pentesting operations during an autonomous pentest of the network; executing, by a second autonomous pentesting agent of the plurality of autonomous pentesting agents and at least partially overlapping in time with the one or more first autonomous pentesting operations, one or more second autonomous pentesting operations during the autonomous pentest of the network; outputting, by the first autonomous pentesting agent and during the autonomous pentest of the network, network information obtained by the first autonomous pentesting agent from the one or more first autonomous pentesting operations; and executing, by the second autonomous pentesting agent and during the autonomous pentest, one or more third autonomous pentesting operations that are based on the network information.

In some aspects, the techniques described herein relate to an apparatus for autonomous pentesting of a network, including: one or more memories storing processor-executable code; and one or more processors coupled with the one or more memories and individually or collectively operable to execute the code to cause the apparatus to: execute, by a first autonomous pentesting agent of a plurality of autonomous pentesting agents, one or more first autonomous pentesting operations during an autonomous pentest of the network; execute, by a second autonomous pentesting agent of the plurality of autonomous pentesting agents and at least partially overlapping in time with the one or more first autonomous pentesting operations, one or more second autonomous pentesting operations during the autonomous pentest of the network; output, by the first autonomous pentesting agent and during the autonomous pentest of the network, network information obtained by the first autonomous pentesting agent from the one or more first autonomous pentesting operations; and execute, by the second autonomous pentesting agent and during the autonomous pentest, one or more third autonomous pentesting operations that are based on the network information.

In some aspects, the techniques described herein relate to a non-transitory computer-readable medium storing code for autonomous pentesting of a network, the code including instructions executable by one or more processors to: execute, by a first autonomous pentesting agent of a plurality of autonomous pentesting agents, one or more first autonomous pentesting operations during an autonomous pentest of the network; execute, by a second autonomous pentesting agent of the plurality of autonomous pentesting agents and at least partially overlapping in time with the one or more first autonomous pentesting operations, one or more second autonomous pentesting operations during the autonomous pentest of the network; output, by the first autonomous pentesting agent and during the autonomous pentest of the network, network information obtained by the first autonomous pentesting agent from the one or more first autonomous pentesting operations; and execute, by the second autonomous pentesting agent and during the autonomous pentest, one or more third autonomous pentesting operations that are based on the network information.

In some aspects, the techniques described herein relate to a method for pentesting, including: executing, by a first pentesting agent of a plurality of pentesting agents, a first pentesting operation during a pentest of a target network; publishing, by the first pentesting agent, one or more pentesting events associated with the first pentesting operation to an event bus in a First-In, First Out (FIFO) ordering that is specific to the pentest; transforming the one or more pentesting events published to the event bus in real-time to a live vulnerability database; and executing, by a second pentesting agent of the plurality of pentesting agents and during the pentest, a second pentesting operation that is based at least in part on accessing the live vulnerability database.

In some aspects, the techniques described herein relate to an apparatus for pentesting, including: one or more memories storing code; and one or more processors coupled with the one or more memories and individually or collectively operable to execute the code to cause the apparatus to: execute, by a first pentesting agent of a plurality of pentesting agents, a first pentesting operation during a pentest of a target network; publish, by the first pentesting agent, one or more pentesting events associated with the first pentesting operation to an event bus in a FIFO ordering that is specific to the pentest; transform the one or more pentesting events published to the event bus in real-time to a live vulnerability database; and execute, by a second pentesting agent of the plurality of pentesting agents and during the pentest, a second pentesting operation that is based at least in part on accessing the live vulnerability database.

In some aspects, the techniques described herein relate to a non-transitory computer-readable medium storing code for pentesting of a network, the code including instructions executable by one or more processors to: execute, by a first pentesting agent of a plurality of pentesting agents, a first pentesting operation during a pentest of a target network; publish, by the first pentesting agent, one or more pentesting events associated with the first pentesting operation to an event bus in a FIFO ordering that is specific to the pentest; transform the one or more pentesting events published to the event bus in real-time to a live vulnerability database; and execute, by a second pentesting agent of the plurality of pentesting agents and during the pentest, a second pentesting operation that is based at least in part on accessing the live vulnerability database.

### BRIEF DESCRIPTION OF THE DRAWINGS

FIG. 1 shows an example of a computing environment that supports multi-agent coordination in autonomous pentesting in accordance with aspects of the present disclosure.
FIG. 2 shows an example of an autonomous pentest map that supports multi-agent coordination in autonomous pentesting in accordance with aspects of the present disclosure.
FIG. 3 shows an example of a computing environment that supports multi-agent coordination in autonomous pentesting in accordance with aspects of the present disclosure.
FIG. 4 shows an example of a computing environment that supports multi-agent coordination in autonomous pentesting in accordance with aspects of the present disclosure.
FIG. 5 shows an example of an autonomous pentest that includes multi-agent coordination in accordance with aspects of the present disclosure.
FIG. 6 shows an example of a computing environment that supports multi-agent coordination in autonomous pentesting in accordance with aspects of the present disclosure.
FIG. 7 shows a diagram of a system including a device that supports multi-agent coordination in autonomous pentesting in accordance with aspects of the present disclosure.
FIGs. 8 and 9 show flowcharts illustrating methods that support multi-agent coordination in autonomous pentesting in accordance with aspects of the present disclosure.

### DETAILED DESCRIPTION

In some cases, a single pentesting agent may perform a pentest on a network. For example, the pentesting agent may identify and exploit vulnerabilities of network assets of the network by performing pentesting operations sequentially. That is, the pentesting agent may execute one or more pentesting operations to gain unauthorized access to a network asset, then, using the unauthorized access, execute one or more subsequent pentesting operations to gain unauthorized access to another network asset, and so on. In some cases, a central core may manage the pentesting agent. For example, the central core may manage operations of the pentesting agent by collecting information obtained by the pentesting agent (e.g., to store in a database) and, based on the information, determine pentesting operations that the pentesting agent is to perform. Using a single central core and a single pentesting agent may not be effective for some environments, such as relatively large or segmented environments where the pentesting agent may be slow to gather information about the environment and/or correlate findings across different areas of the environment. For example, a single pentesting agent may be unable to coordinate one or more tasks such as identifying subdomains, reusing credentials, or preventing adverse events such as account lockouts. In some cases, to perform pentests more quickly for a large or segmented environment, multiple pentesting agents may perform individual pentests of different areas of the environment without communication with one another and/or without a central entity identifying how a discovery in one area may inform another pentest in a different area. Lack of coordination between pentesting agents or pentests of different areas of a network environment may slow discovery of weaknesses and vulnerabilities and, in some cases, limit information that may be obtained through pentesting.

As described herein, multiple autonomous pentesting agents may perform a coordinated pentest of a network. For example, a central core may manage operations of multiple autonomous pentesting agents performing pentesting operations simultaneously or concurrently. Autonomous pentesting agents may execute pentesting operations and write information obtained via the pentesting operations to a data store shared among the multiple autonomous pentesting agents. When an autonomous pentesting agent writes information to the data store, the central core may evaluate whether the information may be used by other autonomous pentesting agents. As an example, the central core may determine that a credential obtained by a first autonomous pentesting agent in a first area (or asset group) of a network may be used by a second autonomous pentesting agent in a second area (or asset group) of the network, as the second area may include a service that the credential may be used to access. In another example, the central core may launch an external pentest of the network by deploying an additional autonomous pentesting agent and attempt to use the credential on an externally exposed subdomain of the network. The central core may communicate with other central cores that manage operations of other autonomous pentesting agents. For example, each central core may be configured with a target or area of the network and may coordinate respective autonomous pentesting agents in accordance with their respective targets or in their respective areas. By linking multiple autonomous pentesting agents through a shared data store and coordinating operations via a central core, the autonomous pentesting agents may perform an autonomous pentest with improved coverage and speed compared to a pentest performed by a single pentesting agent.

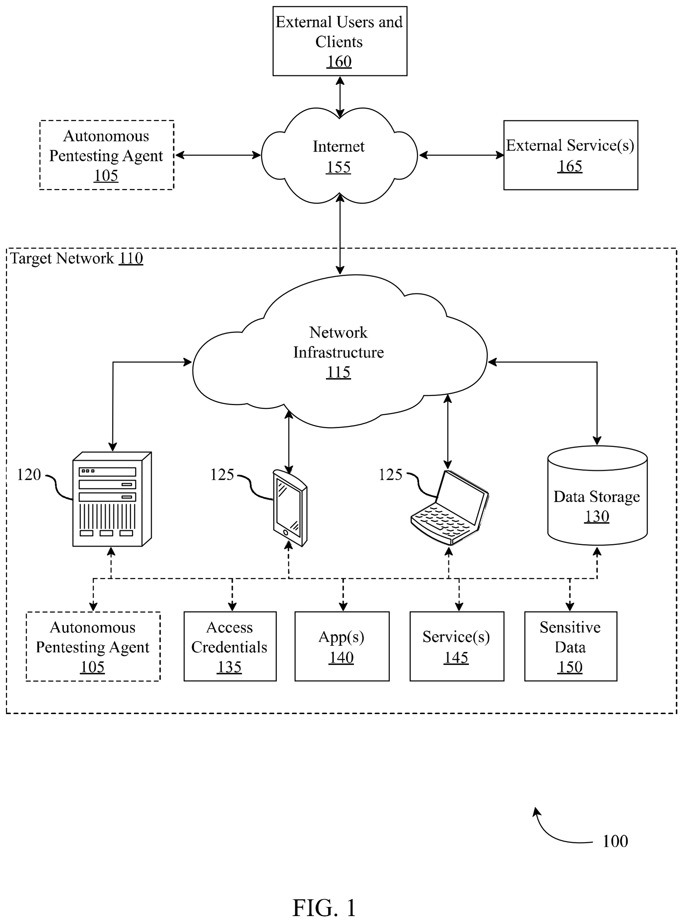

**FIG. 1** illustrates an example of a computing environment 100 that supports multi-agent coordination in autonomous pentesting in accordance with aspects of the present disclosure. The computing environment 100 may include an autonomous pentesting agent 105 that performs an autonomous pentest of a target network 110. The target network 110 may include one or more devices or systems, such as a network infrastructure 115, server 120, computing devices 125, data storage 130, or any combination thereof. The devices or systems of the target network 110 may be configured to access or provide various network information and services, such as access credentials 135, app(s) 140, service(s) 145, sensitive data 150, or any combination thereof.

The target network 110 may allow the server 120, the computing devices 125, and the data storage 130 to communicate (e.g., exchange information) with one another. For example, the network infrastructure 115 may include any quantity of communications links and any quantity of hubs, bridges, routers, switches, ports, or other physical or logical network components that support communication between the server 120, computing devices 125, and data storage 130 of the target network 110 as well as communication between the target network 110 (e.g., the private network) and the Internet 155 or other external network (outside the target network 110, beyond a firewall associated with the target network 110, etc.). The target network 110 may include aspects of one or more wired networks, one or more wireless networks (e.g., cellular networks, Wi-Fi networks), or any combination thereof. The target network 110 may include aspects of one or more public networks or private networks, as well as secured or unsecured networks, or any combination thereof. For example, the target network 110 may be an example of a private network that includes one or more public-facing or external assets that are accessible via the Internet 155. As an example, the Internet 155 may refer to the world wide web, and users (e.g., external users and clients 160), may access the target network 110 via the Internet 155 through a website or application that is accessible or available via the Internet 155. For instance, the external users and clients 160, the external service(s) 165, or both may access network information and services via the Internet 155, including the access credentials 135, app(s) 140, service(s) 145, and sensitive data 150.

The target network 110 may be, or may be part of, a domain, such as a private domain associated with an organization, company, client, business, etc., defining an administrative boundary of the target network 110. The domain may include components such as computing devices 125, the server 120, etc., along with associated users (e.g., access credentials 135) and service(s) 145 that are governed or configured by one or more domain controllers and operate in accordance with policies that are put in place and managed by the one or more domain controllers. The domain may be divided into multiple subdomains or groups containing respective subsets of components, users (e.g., access credentials 135), and service(s) 145 that operate in accordance with a respective policy (e.g., group policy).

The target network 110 may be accessible via one or more hosts. For example, hosts may be examples of real or virtual machines that are connected to and capable of accessing the target network 110. Real machines may refer to machines having or made up of hardware components including a central processing unit (CPU), memory, hard drive, or the like, such as physical or tangible computers or servers (e.g., the server 120, the computing devices 125, etc.). Virtual machines may refer to software within or running on a physical computer or server using portions of the CPU, memory, hard drive, or the like of the physical computer or server. A physical computer or server may include or support multiple virtual machines, such as multiple tenants (e.g., in a multi-tenant environment). The server 120 and the computing devices 125 may be examples of hosts. Hosts may communicate data with other devices within the target network 110 and outside of the network (e.g., with devices accessible via the Internet 155). For example, the server 120 may send data to and receive data from one or more of the computing devices 125. Additionally, or alternatively, hosts may access resources of the target network 110, including the access credentials 135, app(s) 140, service(s) 145, or sensitive data 150. As used herein, hosts may refer to web hosts, cloud hosts, virtual hosts, remote hosts, or the like.

Hosts may be examples of and include network assets. For example, a host may be an example of a type of network asset that has access to other network assets, such as applications, services, and resources. As used herein, network assets refer to data, devices, or components of the target network 110, including data, software, and hardware. In some examples, network assets may refer to machines that include network shares. For example, network assets may be examples of machines (e.g., real or virtual machines) that include shares of the target network 110, such as file sharing systems. Network assets may be obtained and utilized by attackers to compromise the target network 110. In some cases, network assets may refer to network entities (e.g., system hosts or machines) that have internet protocol (IP) addresses and may be discovered during scans. The server 120, the computing devices 125 (e.g., laptops, desktops, mobile devices, smart vehicles, wearables), the data storage 130, and the access credentials 135, app(s) 140, service(s) 145, cookies, encryption and decryption keys, tokens, and sensitive data 150 accessible via the devices and systems of the target network 110 may all be examples of network assets. Other examples of network assets include virtual machines, printers, Internet-of-Things (IoT) devices, switches, routers, access points, endpoints, public static IPs, Lambdas and serverless architectures, Amazon Web Service (AWS) containers, and Kubernetes pods and other containerized applications. For example, physical devices (e.g., servers, computing devices, data storage) and systems may be considered network assets as well as information, apps, and services accessible through physical devices and systems of the target network 110.

Hosts may store, provide, or implement access credentials 135, app(s) 140, service(s) 145, sensitive data 150, or any combination thereof. In some cases, computing devices 125 on the network may access the one or more network assets (credentials 135, app(s) 140, service(s) 145, sensitive data 150, etc.) via the server 120 (e.g., via a host). Additionally, or alternatively, computing devices 125 may locally store or otherwise access one or more network assets of the target network 110. For example, users of the target network 110 may access app(s) 140 and service(s) 145 via the computing devices 125 directly or indirectly (e.g., via a connection between the computing devices 125 and the server 120).

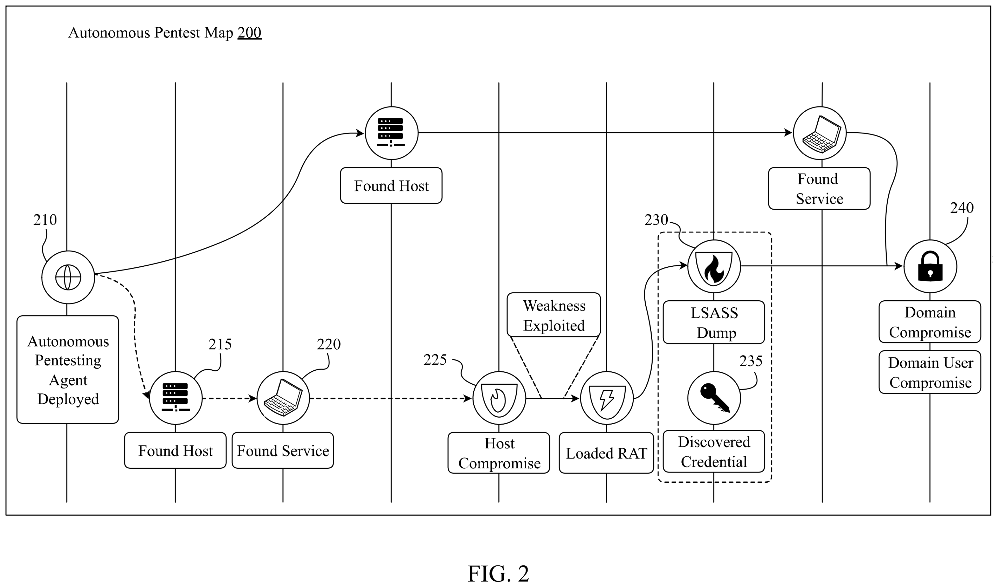

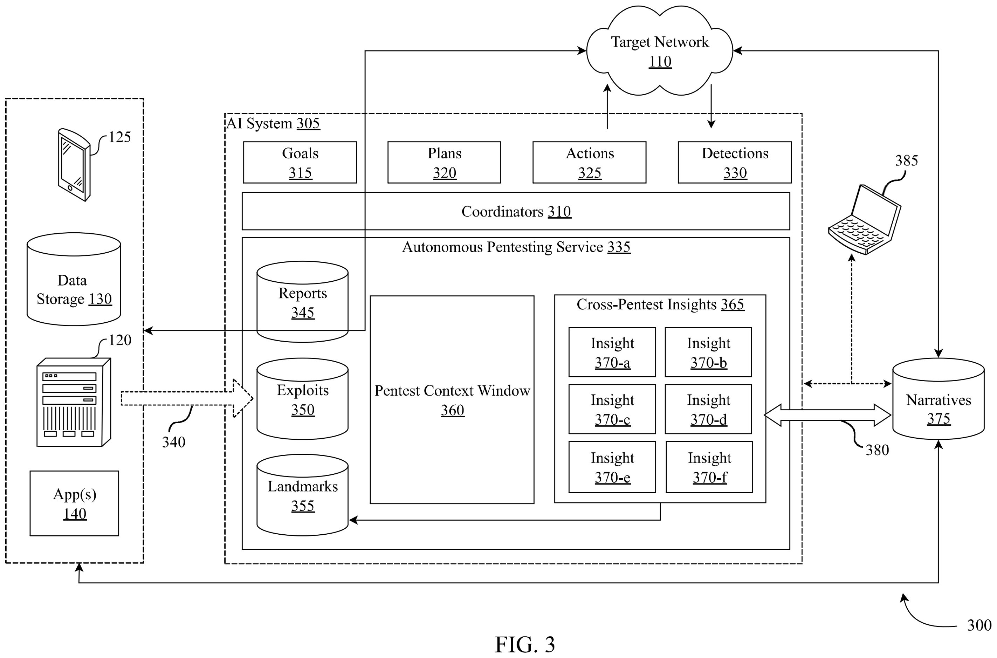

The autonomous pentesting agent 105 may perform a pentest of the target network 110. As used herein, a penetration test or a "pentest" may refer to the performance of one or more security operations that simulate a cybersecurity attack in order to identify vulnerabilities in the target network 110. The autonomous pentesting agent 105 may perform the pentest of the target network 110 using one or more artificial intelligence (AI) models. For example, the autonomous pentesting agent 105 may be "autonomous" in that the autonomous pentesting agent 105 may perform the pentest without hard-coding (e.g., deterministic coding), user inputs, or the like and, instead, by using the one or more AI models. The autonomous pentesting agent 105 may identify, via the pentest, security vulnerabilities of the target network 110. An example of an output of the pentest may be described in greater detail elsewhere herein, including with reference to FIGs. 2 and 3.

The autonomous pentesting agent 105 may, via the one or more AI models, determine and implement an attack path for a pentest. For example, the autonomous pentesting agent 105 may identify or select an asset of the target network 110 to attempt to access initially and, from that asset, another asset to attempt to access, and so on. In other words, the autonomous pentesting agent 105 may use the one or more AI models to generate (e.g., output) decisions or operations that mimic those of a potential cyber attacker. The one or more AI models may output a targeted asset of the target network 110 to be subject to an access attempt by the autonomous pentesting agent 105 based on inputs and relevant context of various assets in the target network 110. For instance, the one or more AI models may output targeted assets based on the relative position of assets within the target network 110, asset types, downstream assets (e.g., accessible after or through accessing a targeted asset), or the like.

The one or more AI models may be trained using data of previous pentests of the target network 110 or other networks. For example, an autonomous pentesting service that deploys the autonomous pentesting agent 105 may train one or more AI models used by the autonomous pentesting agent 105 using tactics, techniques, and procedures (TTPs) of attackers (e.g., human or automated pentests), autonomous pentests performed on the target network 110 previously, on other networks, or both. The autonomous pentesting agent 105 may perform improved pentests after the one or more AI models are trained using previous pentests of the target network 110. That is, as the autonomous pentesting agent 105 learns more about the target network 110, the autonomous pentesting agent 105 may perform pentests with higher performance levels (higher accuracy, higher quantities of potential attack paths, etc.).

In some cases, the pentest may be initiated internal (e.g., within) or external to (e.g., outside of a firewall) the target network 110. For example, the autonomous pentesting agent 105 may be deployed at a host device of the target network 110 (e.g., deployed to the server 120 or computing devices 125). In such cases, the autonomous pentesting agent 105 may perform the pentest as an internal user of the target network 110. Such internal pentests may be indicative of or emulate internal security threats to the network, such as from employees of an organization or an attacker that has otherwise access to the target network 110 internally or to a user of the target network 110. Alternatively, the autonomous pentesting agent 105 may be deployed at the Internet 155. For example, the autonomous pentesting agent 105 may perform the pentest as an external user of the target network 110, such as by accessing external or public-facing assets of the target network 110 on the Internet 155. In some examples, the autonomous pentesting agent 105 may be deployed via a runner. For example, a runner may be an executable process, script, or sequence, which enables automated deployment of a container (e.g., a Docker container). A container may refer to an executable package of software including code, runtime, system tools, system libraries, settings, and other components to run an application. The runner and the container may allow a user to provision and deploy pentests from a portal without manually running a launch script for the autonomous pentesting agent 105 (such as in accordance with a pentest schedule).

By performing the pentest autonomously via the autonomous pentesting agent 105, techniques described herein may support improved performance related to speed, identification of security vulnerabilities, and provision of remediation measures. For example, the pentest, when performed autonomously using the autonomous pentesting agent 105, may support improved performance and, by extension, improved security of the target network 110 against cybersecurity attacks relative to hard-coded (e.g., deterministic) or manual (e.g., human operated) pentests.

As described herein, the autonomous pentesting agent 105, along with one or more other autonomous pentesting agents, may perform a coordinated pentest of the target network 110. For example, the autonomous pentesting agent 105 may execute first autonomous pentesting operations and, through the autonomous pentesting operations, obtain first network information. At the same time, the one or more other autonomous pentesting agents may execute second autonomous pentesting operations. The autonomous pentesting agent 105 may output the network information to memory shared with the one or more other autonomous pentesting agents. The one or more other autonomous pentesting agents may use the network information to execute third autonomous pentesting operations. That is, the one or more other autonomous pentesting agents may use information obtained by the autonomous pentesting agent 105 for their own autonomous pentesting operations. In some examples, a central core may coordinate operations of the autonomous pentesting agent 105 and the one or more other autonomous pentesting agents.

By linking multiple autonomous pentesting agents through a shared knowledge store and/or a central core, techniques described herein may support improved coverage and speed of autonomous pentests while reducing redundancies. For example, each autonomous pentesting agent may perform autonomous pentesting operations in accordance with a scope (e.g., specialized operations or configuration) that is different than the other autonomous pentesting agents, ensuring that redundant tasks are not performed. Performing different pentesting operations according to different scopes may enable the autonomous pentesting agents to identify weaknesses and vulnerabilities that a single pentesting agent may fail to identify. In other words, by using multiple, coordinated autonomous pentesting agents, autonomous pentests described herein may have improved coverage or be more comprehensive (e.g., identify more weaknesses and/or vulnerabilities across a wider range of the target network 110) compared to an autonomous pentest performed by a single autonomous pentesting agent. Additionally, by dynamically spawning additional autonomous pentesting agents during autonomous pentesting, techniques described herein may support improved scalability while conserving pentesting resources (e.g., refraining from spawning an agent until a task is identified for the agent to perform) relative to a single autonomous pentesting agent.

Further, an autonomous pentest performed by multiple agents having a shared knowledge store may have greater similarity to a human team of attackers. That is, by performing an autonomous pentest using multiple agents, techniques described herein may be used to identify potential attack paths associated with teams of attackers (e.g., in addition to or rather than a single attacker). In other words, a multi-agent pentest may identify different attack patterns than a single agent pentest, enabling identification of wider ranges of security vulnerabilities and potential attack paths.

**FIG. 2** shows an example of an autonomous pentest map 200 that supports multi-agent coordination in autonomous pentesting in accordance with aspects of the present disclosure. The autonomous pentest map 200 may be an example of an output or result of an autonomous pentest performed by an autonomous pentesting agent, such as a pentest performed by the autonomous pentesting agent 105 in the target network 110 as described with reference to FIG. 1. The autonomous pentest map 200 may illustrate and describe an example of events of a pentest, including operations performed by and information obtained by the autonomous pentesting agent. The autonomous pentest map 200 in the example of FIG. 2 may illustrate a map after completion of a pentest, but in some examples, the autonomous pentesting service may display and update the autonomous pentest map 200 during a pentest as events occur. For example, the autonomous pentesting service may display a real-time view that provides real-time information and updates on the progress of a currently running pentest, including status updates for injected credentials.

The autonomous pentest map 200 may include one or more types of events. In some examples, the autonomous pentest map 200 may illustrate notable events, which may be events that did or would likely (e.g., in a real-time view) lead to a critical impact. For example, the autonomous pentest map 200 may include deployment 210 (e.g., of the autonomous pentesting agent), host identification 215, service identification 220, host compromise 225, deployment of an attacker tool 230 (e.g., a remote access tool (RAT), credential identification 235, and access 240 (e.g., to a domain, a domain user, or both). An attacker tool 230, such as a RAT, may refer to software that enables full control of a tech device remotely. RATs may have legitimate uses, such as technical support, but may also be controlled by attackers with malicious intent. In the context of the autonomous pentesting agent, a RAT may be used to provide the autonomous pentesting agent with additional access to further explore attack paths during operations.

The autonomous pentest map 200 includes one possible attack path including two attack branches that is generated based on an autonomous pentest. However, it is understood that any quantity of possible attack paths having any quantity of possible attack branches may be output from an autonomous pentest. In other words, the autonomous pentest map 200 may include one or more attack paths having one or more respective attack branches. In some cases, dozens, hundreds, or thousands of possible attack paths, branches, or both may be generated based on the autonomous pentest. Additionally, it is understood that while the autonomous pentest map 200 shown in Fig. 2 displays one example of an autonomous pentest for illustration, other maps including various different events, hosts, attack paths, and attack branches may result from various autonomous pentests.

In the example of the autonomous pentest map 200, the autonomous pentesting agent may identify an attack path having two attack branches. As used herein, attack "path" may be understood to refer to a series of events, set in motion by the autonomous pentest agent, that lead to a compromise of one or more components or assets of a network. In other words, an attack path may refer to the sequence of steps or actions an attacker or autonomous pentesting agent 105 may take to compromise a system or network. An attack path may involve identifying vulnerabilities and other weaknesses, exploiting them, and navigating through the target network 110 to access valuable information or resources. Additionally, "branches" or "chains" of an attack path may refer to one or more events occurring simultaneously or in parallel that lead to the compromise. As an example, in a first attack branch of the autonomous pentest map 200, the autonomous pentesting agent may identify a host, identify a service, and compromise the host (e.g., through the service). On the compromised host, the autonomous pentesting agent may exploit a weakness identified on the service running on the host to load a RAT and remotely control the compromised host. The autonomous pentesting agent may perform, via the RAT, a Local Security Authority Subsystem Service (LSASS) dump, allowing the autonomous pentesting agent to discover a credential. The autonomous pentesting agent may use the credential in a different branch of the attack path. For example, in a second attack branch of the autonomous pentest map 200, the autonomous pentesting agent may identify a host and, through the identified host, a service. The autonomous pentesting agent may use the discovered credentials (e.g., of the first attack branch) at the service (e.g., of the second attack branch to obtain access 240 to the domain, domain user, or both.

As used herein, a weakness may refer to a vulnerability or security flaw that may be exploited by an attacker to compromise a system or network. Weaknesses may include misconfigurations, outdated software, default credentials, or other vulnerabilities that may be leveraged to gain unauthorized access or perform malicious actions. Some vulnerabilities may be publicly known. For example, an N-day may be a software or hardware vulnerability that is already publicly known, (e.g., n days since disclosure, where n is a positive integer) but there may or may not be a security update available to remediate the vulnerability. Weaknesses, if exploited, may be associated with impacts. An impact may summarize, in business terms, the effects the autonomous pentesting agent was able to achieve as a result of exploiting weaknesses in an environment. An example of an impact may be a sensitive data exposure, which may indicate that the autonomous pentesting agent was able to potentially access sensitive information given the filetype or service that is compromised (e.g., business documents in file shares, Outlook personal storage table (PST) files, confluence remote code execution (RCE), exchange RCE, etc.).

An autonomous pentesting service may display the autonomous pentest map 200 such that compromised assets may be identified and security measures may be put in place. In some cases, the autonomous pentesting service may provide mitigation recommendations according to the autonomous pentest map 200. As an example, the autonomous pentest map 200 may identify a particular host or service as a security vulnerability for a network by tracing the access 240 backwards to a host identification 215 event. Accordingly, the autonomous pentesting service may provide a mitigation recommendation to be applied to the host involved in the host identification 215 event, such as according to how the host was identified or how access was obtained to the host at the host compromise 225 event. Similarly, the autonomous pentesting service may provide a mitigation recommendation to be applied to the service involved in the service identification 220 event.

The autonomous pentesting service may support the use of multiple autonomous pentesting agents during an autonomous pentest of a network. For example, the autonomous pentest map 200 may illustrate an attack path of a single autonomous pentesting agent. In some examples, the autonomous pentest map 200 may include one or more additional attack paths corresponding to different autonomous pentesting agents. That is, multiple autonomous pentesting agents may execute autonomous pentesting operations simultaneously or concurrently with one another. Additionally, the autonomous pentest map 200 may include use, by a first autonomous pentesting agent, of information identified by a second, different autonomous pentesting agent. As an example, the first autonomous pentesting agent may execute operations corresponding to a first attack path, including finding a host and a service. At the same time, the second autonomous pentesting agent may execute operations corresponding to a second attack path, including compromising a host, loading a RAT, performing an LSASS dump, and discovering a credential. After the second autonomous pentesting agent discovers the credential, the first autonomous pentesting agent may use the credential at the found service. By the first autonomous pentesting agent and the second autonomous pentesting agent executing operations along respective attack paths simultaneously, the agents may achieve domain compromise faster than a single agent executing operations along different branches of a same attack path.

**FIG. 3** shows an example of a computing environment 300 that supports multi-agent coordination in autonomous pentesting in accordance with aspects of the present disclosure. The computing environment 300 may implement or be implemented by the computing environment 100, the autonomous pentest map 200, or both. For example, the computing environment 300 may include servers 120, computing devices 125, and app(s) 140 utilizing an AI system 305 to perform autonomous pentests.

In some examples, the AI system 305 may be a system designed to process data, learn from past experiences, and make determinations and predictions that mimic human cognitive functions (e.g., from the perspective of a potential cyber attacker). In some cases, the AI system 305 may implement or be implemented by one or more AI or machine learning (ML) models (e.g., AI/ML models). In some examples, an AI/ML model of the AI system 305 may be a supervised learning model configured to learn from labeled training data to generate predictions on inputs. In some other examples, an AI/ML model of the AI system 305 may be an unsupervised learning model that is configured to discover patterns in unlabeled data to generate predictions on inputs. In another example, the AI system 305 may implement reinforcement learning models that are configured to learn behaviors through trial-and-error (e.g., via experimentation). Additionally, or alternatively, the AI system 305 may implement neural networks (e.g., artificial neural networks (ANNs)) that include one or more layers configured to process information via a series of mathematical transformations.

Deep learning models may be a subset of neural networks designed and configured for tasks such as computer vision and natural language processing and may be used by the AI system 305. In some examples, the AI system 305 may utilize a large language model (LLM) which utilizes a neural network architecture to process, understand, and generate natural language. For example, LLMs may be trained on a relatively large corpus of data (e.g., text data, image data, audio data, video data, among others) to perform natural language processing tasks such as text generation, translation, summarization, responding to natural language queries, data generation, or any combination thereof.

The AI system 305 may be an agentic AI system, meaning that the AI system 305 may act autonomously (e.g., through the use of AI agents), at least for some operations, to achieve specified goals, make decisions, and take actions without direct human intervention. In some cases, the AI system 305 may be an agentic AI system with limited human involvement where the AI system 305 may request human guidance or user input only in certain circumstances, such as if the AI system 305 is unable to make a decision or perform a subsequent operation. Further, the AI system 305 may use one or more AI/ML models to set and pursue goals 315 without those goals 315 being specifically defined by human input to the AI system 305. The AI system 305 may further generate plans 320 and execute sequences of actions 325 to achieve those goals 315 and adapt future behavior in accordance with real-time observations and feedback about the effectiveness of the actions 325 to achieve the desired outcomes or meet targets.

For example, in some cases, utilizing one or more AI/ML models, the AI system 305 may include an autonomous pentesting service 335 and may interface with one or more coordinators 310 that coordinate goals 315 and plans 320, actions 325, and detections 330 for achieving the goals 315. For example, for autonomous pentesting, the goals 315 of the AI system 305 may be to obtain access to data stored within a target network 110, compromise (such as by obtaining unauthorized access or deploying unauthorized software to) a domain or a network asset of the target network 110, or any combination thereof. To obtain the goals 315, the AI system 305 may generate one or more plans 320 that are based on actions 325 and detections 330. For example, to determine a next action within a defined set of guardrails or instructions, the AI system 305 may generate a plan 320 that can include an action 325 to invoke (e.g., execute) one or more commands on a target network 110 to obtain a detection 330 from the target network 110.

In some examples, the target network 110 may include one or more network assets such as servers 120, computing devices 125, data storages 130, app(s) 140, or any combination thereof. Further, obtaining a detection 330 from the target network 110 may include the AI system 305 retrieving telemetry data from the one or more network assets of the target network 110. In some cases, telemetry data obtained from the target network 110 may include logs, traces, metrics, events, or any combination thereof from the one or more network assets of the target network 110. For example, a detection 330 may include some data that is obtained from the target network 110 via an autonomous pentest that aids the AI system 305 in achieving the goals 315. In one example, the detection 330 may include an autonomous pentest obtaining a credential that is used to gain unauthorized access to a network asset, which may be an example of one of the goals 315. In another example, a detection 330 may be the autonomous pentest detecting a set of patterns of events indicated within logs of the target network 110, which may be utilized for achieving a respective goal 315. For example, a goal 315 may be to perform a successful credential compromise attack to gain unauthorized access to a network asset and a detection 330 may indicate information to aid an autonomous pentesting agent in performing the credential compromise attack.

In some examples, the AI system 305 may also interface with the coordinators 310 to perform autonomous pentests as described elsewhere herein, such as with reference to FIGs. 1 and 2. When performing autonomous pentests, the AI system 305 may collect and store a relatively large quantity (such as thousands, millions, billions, or trillions) of training data points or tokens for the AI system 305 to perform subsequent autonomous pentests. For example, each action 325 (e.g., command) executed via the AI system 305 may result in a collection of a relatively large quantity of training data points that indicate whether the action 325 succeeded or failed, why the action 325 succeeded or failed, which software, policies, or tools were used to execute the action 325 that resulted in the action 325 succeeding or failing, or any combination thereof. Therefore, the AI system 305 may continuously obtain and update the training data used for training AI/ML models and perform reinforcement learning using collective intelligence to improve the weights and training of the AI/ML models.

In some examples, the training data for the AI system 305 may include telemetry data obtained from the target network 110, data obtained from servers 120, computing devices 125, and app(s) 140 via a developer pipeline 340, or both. In some cases, the training data may include indications of reports 345, exploits 350, and landmarks 355. A report 345 may indicate outputs or artifacts generated by the AI system 305 to document the discoveries, vulnerabilities, and results of an autonomous pentest. An exploit 350 may indicate the tools, techniques, operations, programs, code, and the like utilized by the AI system 305 to perform an autonomous pentest. A landmark 355 may indicate a point or marker within a network (e.g., the target network 110) to assist the AI system 305 to navigate and map an environment of the target network 110 during an autonomous pentest.

In some examples, the AI system 305 may obtain the reports 345, exploits 350, and landmarks 355 based on performing one or more autonomous pentests. In another example, one or more users (e.g., developers) may manually generate the reports 345, exploits 350, and landmarks 355 for training the AI system 305. In such cases, the one or more users may generate the data for the reports 345, exploits 350, and landmarks 355 and label the data for the AI system 305. Additionally, or alternatively, one or more users may utilize an LLM to generate the reports 345, exploits 350, and landmarks 355. For example, a user may prompt an LLM to generate the reports 345, exploits 350, and landmarks 355 by providing the LLM with a set of input parameters that indicate a scope, objectives, and constraints of an autonomous pentest. In some examples, the LLM prompt to generate the reports 345, exploits 350, and landmarks 355 may be a natural language prompt that includes instructions that indicates characteristics of the target network 110, testing protocols, compliance requirements, or any combination thereof. The LLM may then process the prompt and generate the reports 345, exploits 350, and landmarks 355 for training the AI system 305.

Utilizing the reports 345, exploits 350, and landmarks 355, the AI system 305 may perform one or more autonomous pentests by maintaining awareness of the current testing state and progress through a pentest context window 360. The pentest context window 360 may process information about ongoing pentesting operations, including successfully exploited vulnerabilities, accessed systems and data, attempted but failed exploit paths, attack paths, among others.

The AI system 305 may analyze contextual information obtained from performing autonomous pentests to generate cross-pentest insights 365 that can be applied across multiple pentesting operations. For example, as a result of training the AI system 305, one or more autonomous pentests, or both, the AI system 305 may generate a set of cross-pentest insights 365 that indicates one or more insights 370 (e.g., an insight 370-a, an insight 370-b, an insight 370-c, an insight 370-d, an insight 370-e, and an insight 370-f). For example, the insight 370-a may indicate patterns of vulnerable default configurations in software (e.g., commonly used enterprise or commercial software). In some other examples, the insight 370-b may indicate how compromised low-privilege user credentials can be leveraged to eventually gain domain admin access through privilege escalation techniques. Further, the insight 370-c and the insight 370-d may indicate common pathways where initial network access can lead to sensitive data exposure, such as finding unencrypted password files or accessing improperly secured cloud storage buckets. The insight 370-e may indicate recurring vulnerabilities in network segmentation that allow lateral movement between supposedly isolated systems. Additionally, or alternatively, the insight 370-f may indicate patterns where seemingly low-risk misconfigurations can be chained together to achieve relatively significant compromise of the target network 110. Therefore, the cross-pentest insights 365 may indicate one or more insights 370 that represent patterns and vulnerabilities that occur across different networks and testing scenarios, helping organizations better understand systemic security weaknesses and how to address such weaknesses. For example, the cross-pentest insights 365 may be added as landmarks 355 for further training the AI system 305 to perform autonomous pentests.

The cross-pentest insights 365 may be displayed to one or more computing devices 125, app(s) 140, or both to enable users to view and analyze the cross-pentest insights 365 to generate additional TTPs configured to achieve the goals 315 of the AI system 305. To display the cross-pentest insights 365 to one or more users, the AI system 305 may generate one or more narratives 375 that indicate the insights 370 obtained in response to one or more autonomous pentests. In some examples, to generate the one or more narratives 375, the AI system 305 may output (e.g., transmit) the cross-pentest insights 365 via a pipeline 380 connected to a separate AI/ML model (e.g., an LLM). For example, the AI system 305 may output the cross-pentest insights 365 to an LLM that is configured to generate the narratives 375 (e.g., the LLM is finetuned for text generation based on an input of the insights 370). In some cases, the narratives 375 may indicate detailed security postures for organizations, companies, tenants, users, groups of users, or any combination thereof. For example, a narrative 375 may be a compliance narrative that indicates one or more insights 370 about the security compliance of a target network 110. In another example, a narrative 375 may be a presentation for a company or organization that indicates the one or more vulnerabilities in a target network 110 associated with the company or organization. For example, the presentation can indicate the cross-pentest insights 365 obtained from performing one or more autonomous pentests on the target network 110 associated with the company or organization (e.g., the target network 110).

In some examples, users or devices external to the target network 110 may interact, communicate, or otherwise engage with the AI system 305 to configure pentesting parameters, perform pentesting operations on the target network 110, or analyze the results from a pentest on target network 110. For instance, a user such as a service provider for the AI system 305 may operate an external device 385 to provide information to the AI system 305 (e.g., to the coordinators 310), which identifies goals 315, plans 320, or actions 325 for pentesting the target network 110. Additionally, or alternatively, the AI system 305 may provide information, such as cross-pentest insights 365, to the external device 385. A user of the external device 385 may analyze the cross-pentest insights 365 to generate or modify narratives 375 corresponding to the results of the pentest on the target network 110. In some cases, an output of the LLM used to generate narratives 375 may be sent to the external device 385, and a user (e.g., a service provider) of the external device 385 may aggregate narratives 375 about the target network 110 for reporting or conveyance via the pentest context window 360. Alternatively, the user of the external device 385 may modify one or more narratives 375 based on goals 315, plans 320, detections 330, or other information such that the narratives 375 resulting from the pentest for the target network indicate the relevant and important information for identifying weaknesses and addressing vulnerabilities in the target network 110.

An autonomous pentesting service 335 may utilize the AI system 305 to identify intra-pentest insights. For example, the AI system 305 may analyze information obtained by different autonomous pentesting agents deployed within a network during an autonomous pentest. The AI system 305 may identify whether information obtained by an autonomous pentesting agent may be used by another autonomous pentesting agent based on respective positions of the autonomous pentesting agents within the network, network assets available to the autonomous pentesting agents (e.g., previously identified and/or compromised network assets), or the like. For example, the AI system 305 may identify chaining opportunities (e.g., using credentials obtained by one agent to authenticate across domains monitored by another), paths with higher exploitation probabilities, or shared vulnerabilities across discovered hosts. Additionally, the AI system 305 may identify different operations to be performed by different autonomous pentesting agents based on the obtained information. That is, the AI system 305 may coordinate operations of multiple autonomous pentesting agents. In some examples, the AI system 305 may be used by one or more central cores that coordinate the operations of the multiple autonomous pentesting agents. For example, the one or more central cores may use the AI system 305 to analyze information obtained by the autonomous pentesting agents and generate intra-pentest insights, including recommendations for pentesting operations that use the information obtained by the autonomous pentesting agents. In some aspects, the AI system 305 may include one or more LLMs, which may be used to generate the intra-pentest insights.

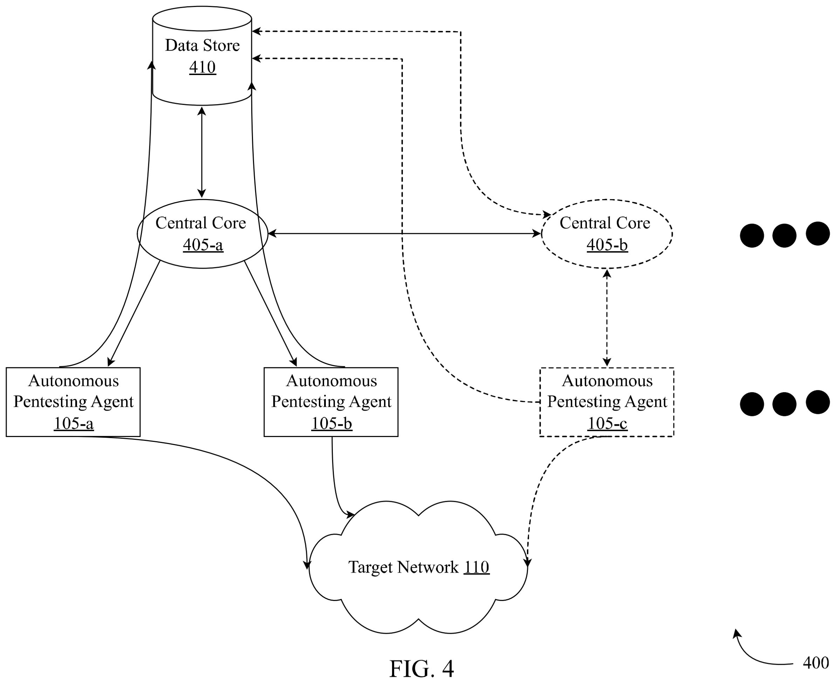

**FIG. 4** shows an example of a computing environment 400 that supports multi-agent coordination in autonomous pentesting in accordance with aspects of the present disclosure. The computing environment 400 may implement or be implemented by the computing environment 100, the autonomous pentest map 200, the computing environment 300, or any combination thereof. For example, the computing environment 400 may illustrate an autonomous pentest of a target network 110 by multiple autonomous pentesting agents.

The computing environment 400 may be an example of a multi-agent autonomous pentesting system in which multiple autonomous pentesting agents operate under the guidance of one or more interconnected cores. For example, a central core 405-a may coordinate performance of pentesting operations by an autonomous pentesting agent 105-a and an autonomous pentesting agent 105-b. Additionally, in some examples, a central core 405-b may coordinate performance of pentesting operations by an autonomous pentesting agent 105-c. The central core 405-a and the central core 405-b may perform one or more communications to coordinate the performance of their respective autonomous pentesting agents.

In some examples, each autonomous pentesting agent may have a different scope. For example, the autonomous pentesting agent 105-a may execute pentesting operations on a first domain including a first set of network assets, and the autonomous pentesting agent 105-b may execute pentesting operations on a second domain including a second, different set of network assets. The first and second domains may be defined according to network asset types, functions within the network (e.g., assets associated with different departments of an organization), or the like. For example, the first and second domains may include internal hosts and cloud services, respectively.

Additionally, or alternatively, the autonomous pentesting agent 105-a may execute pentesting operations according to a first set of configuration parameters, while the autonomous pentesting agent 105-b may execute pentesting operations according to a second, different set of configuration parameters. That is, the autonomous pentesting agent 105-a and the autonomous pentesting agent 105-b may be configured to perform different types of pentesting operations. As an example, the autonomous pentesting agent 105-a may perform internal pentesting operations (e.g., operations within the target network 110), while the autonomous pentesting agent 105-b may perform external pentesting operations (e.g., operations via the Internet or targeted at externally exposed assets of the target network 110 such as in an attempt to gain access within the target network 110).

The autonomous pentesting agents may write findings in real-time to a data store 410 (e.g., a shared database). For example, after executing one or more autonomous pentesting operations, the autonomous pentesting agent 105-a may output network information, such as write the network information to the data store 410. In some examples, the data store 410 may be referred to as a memory that is shared among the autonomous pentesting agents and is accessible by the central core 405-a and/or the central core 405-b during a pentest (e.g., as one or more pentesting operations are being performed simultaneously by multiple autonomous pentesting agents 105). That is, the central core 405-a and/or the central core 405-b may access the data store 410 shared among the autonomous pentesting agents. In some examples, the data store 410 may be a combination of relational data stores and graph data stores (e.g., a Neo4j-based knowledge graph). The relational data store may capture structured metadata such as timestamps, agent identifiers, and configuration parameters, while the graph data store may model relationships between assets, credentials, and attack paths. The data store 410 may include discovered credentials, network paths, permissions, and other contextual data obtained by the autonomous pentesting agents.

When an autonomous pentesting agent updates the data store 410 with information identified via autonomous pentesting operations (e.g., a set of credentials, a misconfigured subdomain, an attack path, etc.), the central core 405-a and/or the central core 405-b may evaluate whether other autonomous pentesting agents may use the information. For example, the central core 405-a may select one or more autonomous pentesting operations based on information in the data store 410, including network information corresponding to pentesting operations by the autonomous pentesting agents, operational states of the autonomous pentesting agents, and a status of the autonomous pentest. An operational state of an autonomous pentesting agent may refer to a location of the autonomous pentesting agent within the target network 110, whether the autonomous pentesting agent is currently executing an operation or is determining a next operation, network assets identified and/or compromised by the autonomous pentesting agent, or the like.

The central core 405-a and/or the central core 405-b may track the operational states of the respective autonomous pentesting agents via periodic telemetry updates or real-time event-driven triggers. For example, the central core 405-a may discover an administrative user account (e.g., via the autonomous pentesting agent 105-a and/or the autonomous pentesting agent 105-b) and update (e.g., write to) the data store 410 with an indication of the discovered administrative user account. Additionally, the central core 405-a may update the data store 410 with an indication that the central core 405-a is attempting to gain unauthorized access to (e.g., bruteforce) the administrative user account. The central core 405-b may discover the same administrative user account (e.g., via the autonomous pentesting agent 105-c) and update the data store 410 with an indication of the discovered administrative user account. The central core 405-b may identify that the administrative user account has already been discovered and is currently subject to operations by the central core 405-a (e.g., identify that the central core 405-a is attempting to bruteforce). Accordingly, the central core 405-b may perform a different operation than the central core 405-a such that access attempts by both the central core 405-a and the central core 405-b do not lock the administrative user account (e.g., which may disrupt activity on the target network 110 and delay operations of the pentest). If the central core 405-a gains unauthorized access to the administrative user account, the central core 405-a may update the data store 410 with administrative credentials enabling access to the account. In such examples, the central core 405-b may attempt to use the administrative credentials.

In some examples, the central core 405-a and/or the central core 405-b may trigger autonomous pentesting operations based on information added to the data store 410. For example, the central core 405-a may trigger autonomous pentesting operations via the autonomous pentesting agent 105-b based on network information corresponding to other autonomous pentesting operations executed via the autonomous pentesting agent 105-a. As an example, the operations triggered by the central core 405-a may be related to an external scan or pentest of the target network 110. That is, the central core 405-a may launch an external scan or pentest of the target network 110 (e.g., a pentest via an external network, such as via the Internet 155 described with reference to FIG. 1) based on the autonomous pentesting agent 105-a or the autonomous pentesting agent 105-b identifying an exposed subdomain. Additionally, or alternatively, the central core 405-a may instruct the autonomous pentesting agent 105-a to attempt a lateral movement using a credential discovered by the autonomous pentesting agent 105-b. In such examples, the autonomous pentesting agent 105-a may receive, from the central core 405-a, an instruction to execute autonomous pentesting operations based on the network information corresponding to autonomous pentesting operations executed by the autonomous pentesting agent 105-b.

In some examples, the central core 405-a and/or the central core 405-b may coordinate operations between the autonomous pentesting agents based on analytics. For example, the central core 405-a may determine whether to instruct the autonomous pentesting agent 105-b to use a credential found by the autonomous pentesting agent 105-a based on factors including operating systems (OSs) of network assets that the autonomous pentesting agent 105-b has identified or has access to, a geographical region of the target network 110 or assets within the network, a cloud service used by the target network 110, or the like. In other words, the central core 405-a may use analytics, such as ML reasoning, to determine whether it is appropriate to use certain types of credentials on a particular OS, region, or cloud service. In some examples, using analytics to determine whether information is relevant to autonomous pentesting agents may improve efficiency. For example, the central core 405-a may filter out data irrelevant to the autonomous pentesting agent 105-a when providing instructions to use information identified by the autonomous pentesting agent 105-b, ensuring that useful information (e.g., information having a statistical likelihood of being used) is passed along.

Coordinating operations between the autonomous pentesting agents may include preventing performance of redundant operations. For example, the autonomous pentesting agent 105-a may obtain access to a network asset and identify a potential attack path based on accessing the network asset. However, the autonomous pentesting agent 105-b may obtain access to the same network asset. As an example, the autonomous pentesting agent 105-a may discover a credential and identify a host at which the credential may be used to achieve host compromise, but the autonomous pentesting agent 105-b may have already discovered and used the credential at the host. Accordingly, the central core 405-a may modify operations of one of the autonomous pentesting agents such that the autonomous pentesting agent 105-a and the autonomous pentesting agent 105-b do not perform the same attack path.

For example, the central core 405-a may terminate operations of one of the autonomous pentesting agents (e.g., an agent that identified the potential attack path second in time). That is, the central core 405-a may, based on identifying a redundancy across the autonomous pentesting operations performed by the agents, terminate one or more autonomous pentesting agents to prevent persistence of the redundancy. Alternatively, the central core 405-a may provide modified or updated instructions to one of the autonomous pentesting agents (e.g., an agent that identified the potential attack path second in time). For example, the central core 405-a may instruct the autonomous pentesting agent 105-a to identify a different attack path than the autonomous pentesting agent 105-b. Or, the central core 405-a may reconfigure a scope or configuration parameter(s) of the autonomous pentesting agent 105-a. That is, the central core 405-a may refine a scope or configuration parameter(s) of the autonomous pentesting agent 105-a such that the scope or configuration parameter(s) are non-overlapping (e.g., disjoint from) the scope or configuration parameter(s) of the autonomous pentesting agent 105-b.

While two central cores and three autonomous pentesting agents are illustrated with reference to FIG. 4, it should be noted that any quantity of cores and any quantity of autonomous pentesting agents may be used for an autonomous pentest of the target network 110. For example, an autonomous pentest may involve a single core and multiple agents, such as the central core 405-a, the autonomous pentesting agent 105-a, and the autonomous pentesting agent 105-b. In such examples, the central core 405-a may maintain awareness of the scopes and tasks of the autonomous pentesting agent 105-a and the autonomous pentesting agent 105-b. Additionally, the central core 405-a may make centralized decisions about task assignments and orchestrate operations, such as credential reuse.

In another example, the autonomous pentest may involve multiple cores. For example, the autonomous pentest may involve the central core 405-a and the central core 405-b, along with their associated autonomous pentesting agent(s). In such examples, the central core 405-a and the central core 405-b may communicate with each other. For example, the central core 405-a may send, to the central core 405-b, an instruction to execute autonomous pentesting operations based on network information from other autonomous pentesting operations being added to the data store 410.

In some aspects, the central core 405-a and the central core 405-b may manage separate domains. That is, the central core 405-a and the central core 405-b may manage pentesting operations for different sets of network assets of the target network 110 and/or execute pentesting operations according to different configuration parameters. Using multiple central cores may support distribution of computing resources for large-scale autonomous pentests and/or support insulation of specialized tasks. For example, a central core may be an example of a physical machine having a threshold quantity of resources. By using additional central core(s), the autonomous pentest may manage greater quantities of autonomous pentesting operations due to increased resource availability.

In some examples, the central core 405-a may spawn the central core 405-b. For example, the central core 405-a (e.g., a "parent" core) may generate the central core 405-b (e.g., a "child" core) based on information obtained by the autonomous pentesting agent 105-a and/or the autonomous pentesting agent 105-b. In other words, the central core 405-a may dynamically spawn (e.g., generate or execute code to establish) the central core 405-b and one or more autonomous pentesting agents managed by the central core 405-b (including the autonomous pentesting agent 105-c) based on information obtained by the autonomous pentesting agent 105-a and/or the autonomous pentesting agent 105-b via autonomous pentesting operations. In such examples, the central core 405-b may periodically synchronize with the central core 405-a. For example, the central core 405-a may manage one or more aspects of the central core 405-b (e.g., provide instructions, indicate areas of the network to perform operations on, etc.) based on the central core 405-b periodically providing updates.

An autonomous pentesting platform associated with the one or more central cores and the one or more autonomous pentesting agents illustrated with reference to FIG. 4 may receive one or more user inputs authorizing pentesting operations. For example, one or more autonomous pentesting operations may be configured to be performed after receiving authorization via user input. As an example, the central core 405-a may select an autonomous pentesting operation to be performed by the autonomous pentesting agent 105-b based on information obtained by the autonomous pentesting agent 105-a via a different autonomous pentesting operation. Prior to instructing the autonomous pentesting agent 105-b to perform the autonomous pentesting operation, the central core 405-a may transmit a request for approval of the autonomous pentesting operation based on settings or a configuration for the autonomous pentest. After receiving an indication that the operation is approved, the central core 405-a may instruct the autonomous pentesting agent 105-b to perform the operation. In some examples, the one or more central cores may request authorization to perform some types of pentesting operations, such as external scans or pentests. For example, the central core 405-a may transmit a recommendation to perform an external scan of the target network 110 based on identifying information via internal pentesting operations. The central core 405-a may instruct the autonomous pentesting agent 105-a to execute the external scan after receiving approval of the recommendation.

Because the central core 405-a and/or the central core 405-b may access real-time discoveries of the autonomous pentesting agents, there may be minimal delay (compared to performing a pentest using a single agent) between an autonomous pentesting agent identifying information and the same or a different autonomous pentesting agent using the information to perform an autonomous pentesting operation. As an example, the autonomous pentesting agent 105-a may identify a credential (e.g., a New Technology Local Area Network (LAN) Manager (NTLM) hash for Microsoft Active Directory, Azure, or Entra), and the autonomous pentesting agent 105-b may use the credential shortly thereafter (e.g., immediately or shortly after discovery) to escalate privileges.

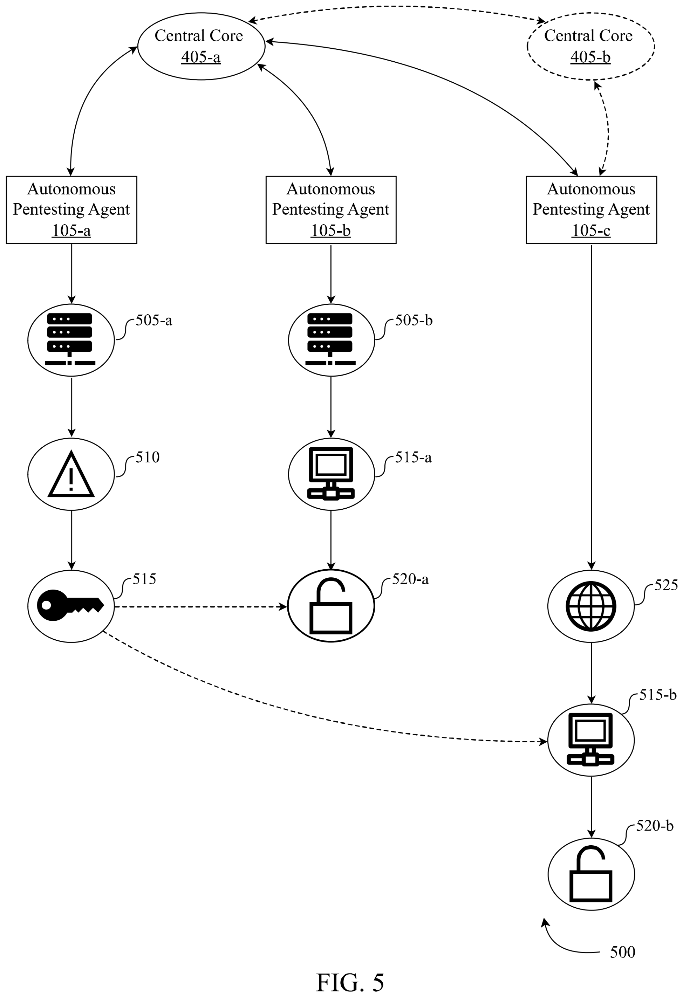

**FIG. 5** shows an example of an autonomous pentest 500 that includes multi-agent coordination in accordance with aspects of the present disclosure. The autonomous pentest 500 may implement or be implemented by the computing environment 100, the autonomous pentest map 200, the computing environment 300, the computing environment 400, or any combination thereof. For example, the autonomous pentest 500 may illustrate multiple attack paths of multiple autonomous pentesting agents coordinated via one or more central cores.

The autonomous pentesting agent 105-a may, during the autonomous pentest 500, execute autonomous pentesting operations along a first attack path. The first attack path may include identification of a host 505-a, compromise 510 of the host 505-a, and discovery of a credential 515 (e.g., Azure or Entra credentials). Throughout the autonomous pentesting operations of the first attack path, the autonomous pentesting agent 105-a may write information about the first attack path, including identified and/or compromised network assets, to memory shared with the autonomous pentesting agent 105-b and accessible to the central core 405-a. That is, the central core 405-a may monitor information about the autonomous pentesting operations executed by the autonomous pentesting agent 105-a in real-time via the shared memory.

While the autonomous pentesting agent 105-a executes autonomous pentesting operations along the first attack path, the autonomous pentesting agent 105-b may execute autonomous pentesting operations along a second attack path. For example, the second attack path may include identification of a host 505-b and identification of a service 515-a. The central core 405-a may identify, in real-time, that the credential 515 discovered by the autonomous pentesting agent 105-a may be used to access the service 515-a identified by the autonomous pentesting agent 105-b. Accordingly, the central core 405-a may provide the credential 515 to the autonomous pentesting agent 105-b and instruct the autonomous pentesting agent 105-b to attempt to use the credential 515 to access the service 515-a. In other words, the central core 405-a may relay the credential to attempt to compromise the service 515-a. The autonomous pentesting agent 105-b may achieve compromise 520-a of the service 515-a by using the credential 515.

In addition to or alternatively from using the credential 515 for the second attack path of the autonomous pentesting agent 105-b, the central core 405-a may identify that the credential 515 may be used at a subdomain 515-b that is externally exposed. Accordingly, the central core 405-a may launch the autonomous pentesting agent 105-c (and, optionally, the central core 405-b) to probe the subdomain 515-b. In some examples, the central core 405-a may launch the autonomous pentesting agent 105-c after approval of the operation via a user input. The autonomous pentesting agent 105-c may identify, via the Internet 525, the subdomain 515-b and use the credential 515 to achieve compromise 520-b.

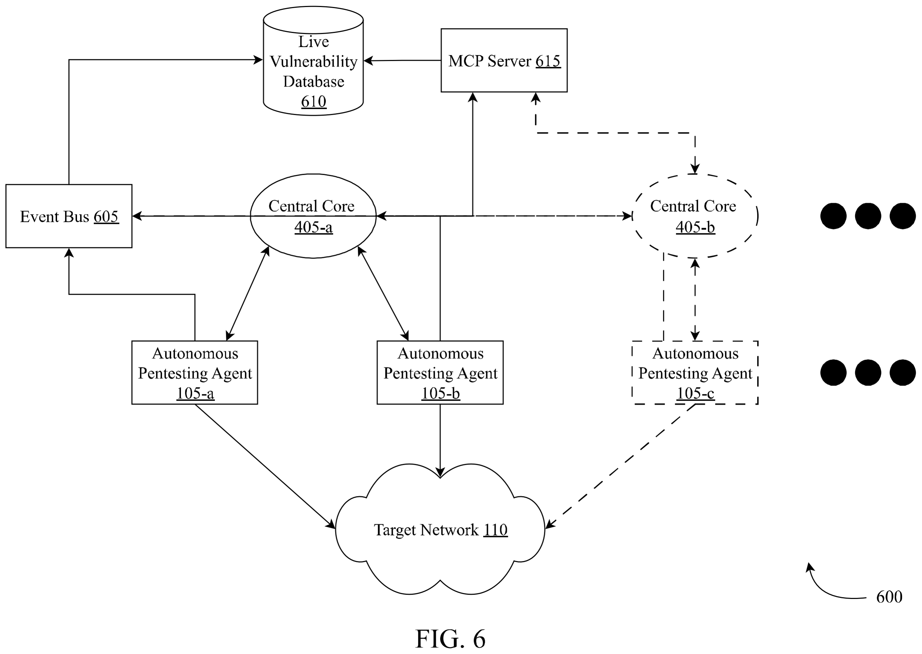

**FIG. 6** shows an example of a computing environment 600 that supports multi-agent coordination in autonomous pentesting in accordance with aspects of the present disclosure. The computing environment 600 may implement or be implemented by the computing environment 100, the autonomous pentest map 200, the computing environment 300, the computing environment 400, the autonomous pentest 500, or any combination thereof. For example, the computing environment 600 may illustrate an autonomous pentest of a target network 110 by multiple autonomous pentesting agents.

The computing environment 600 may be similar to the multi-agent autonomous pentesting system described with reference to FIG. 4, where the autonomous pentesting agent 105-a, the autonomous pentesting agent 105-b, and the autonomous pentesting agent 105-c operate under guidance of the central core 405-a and the central core 405-b. While FIG. 4 describes the autonomous pentesting agents writing findings in real-time to a data store 410 (a shared database combining relational and graph data stores), FIG. 6 introduces an event-driven architecture with an event bus 605, a live vulnerability database 610, and a Model Context Protocol server, the MCP server 615.

The event bus 605 may provide a publish-subscribe messaging infrastructure that enables communication between the autonomous pentesting agents and the central cores during a pentest. The event bus 605 may maintain First-In, First-Out (FIFO) ordering of pentesting events that is specific to each pentest. The FIFO ordering may preserve the temporal sequence in which events occur, maintaining relationships and dependencies between discoveries made by different autonomous pentesting agents. Each pentest may have a dedicated event bus instance specific to a target network, providing isolation between pentests for different clients or networks under test. The event bus 605 may persist events with configurable Time-To-Live (TTL) parameters. Events may expire after a TTL period elapses, preventing accumulation of outdated information while active agents continue consuming relevant events.

The live vulnerability database 610 may receive transformed pentesting events from the event bus 605 via a streaming Extract-Transform-Load (ETL) pipeline. The live vulnerability database 610 may differ from the data store 410 described with reference to FIG. 4 in that the live vulnerability database 610 may receive continuous real-time updates during active pentest execution (rather than batch updates after pentest operations complete). The streaming ETL pipeline may extract events from the event bus 605, may transform the events by normalizing data formats, enriching events with metadata, correlating related events, and filtering by priority, and may load transformed data into the live vulnerability database 610. The transformation and loading may occur continuously while pentesting agents execute operations, enabling reduced latency between event publication and database availability. The live vulnerability database 610 may include a combination of relational data stores for capturing structured metadata (e.g., timestamps, agent identifiers, asset inventory, credentials) and graph data stores for modeling relationships between assets, credentials, and attack paths.

The MCP server 615 may provide an interface to the live vulnerability database 610. The MCP server 615 may enable pentesting agents and central cores to access shared intelligence through natural language queries. For example, an autonomous pentesting agent may query the MCP server 615 with "Retrieve credentials discovered in last 7 days for this client" or "Get credentials for domain services within my scope." The MCP server 615 may process queries, may retrieve responsive information from the live vulnerability database 610, and may return contextualized responses configured for consumption by AI models within pentesting agents or central cores. The MCP server 615 may manage the size of a context window through temporal filtering (e.g., limiting results to a configurable time window) and scope-based filtering (e.g., returning results matching the assigned network segment or asset scope of an agent).

The computing environment 600 may support real-time coordination between pentesting agents through event publication, streaming transformation, and shared database access. The autonomous pentesting agent 105-a may execute a first pentesting operation during a pentest of the target network 110. As described with reference to FIG. 4, the autonomous pentesting agents may have different scopes, with the autonomous pentesting agent 105-a executing pentesting operations on a first domain or first network segment, the autonomous pentesting agent 105-b executing operations on a second domain or second network segment, and the autonomous pentesting agent 105-c executing operations according to different configuration parameters (e.g., internal testing versus external testing). The first pentesting operation may include discovering and compromising a host, discovering a credential on a compromised host, identifying services or vulnerabilities, or exploring attack paths.

The autonomous pentesting agent 105-a may publish one or more pentesting events associated with the first pentesting operation to the event bus 605. Events may be published in FIFO ordering that is specific to the pentest. The pentesting events may include credential discovery events (indicating discovered credentials, e.g., passwords, hashes, or tokens), host or service compromise events (indicating successful exploitation), asset discovery events (indicating newly identified hosts, services, or network topology), or vulnerability identification events. Each event may include metadata (e.g., an event identifier, event type, timestamp, pentest identifier, agent identifier, scope information) and a payload including discovery data.

The one or more pentesting events published to the event bus 605 may be transformed in real-time to the live vulnerability database 610 via the streaming ETL pipeline. The transformation may occur continuously during the active pentest. A middleware layer may extract events from the event bus 605 as they arrive, maintaining FIFO order. The middleware may transform the extracted events by normalizing data formats across different agent implementations, enriching events with contextual metadata, correlating related events (e.g., linking discovered credentials to hosts where credentials may apply), and filtering by priority. The middleware may load the transformed data into the live vulnerability database 610, updating relational tables and graph structures.

The autonomous pentesting agent 105-b may access the live vulnerability database 610 during the pentest. The autonomous pentesting agent 105-b may access the database while the autonomous pentesting agent 105-a and potentially other agents continue executing concurrent operations. As described with reference to FIG. 4, the central core 405-a and the central core 405-b may access real-time discoveries of autonomous pentesting agents, resulting in minimal delay compared to performing a pentest using a single agent. FIG. 6 describes the mechanisms enabling this access through event-driven push notifications and streaming ETL transformation.

The autonomous pentesting agent 105-b may access the live vulnerability database 610 through direct database queries, through the MCP server 615 using natural language queries, and/or by receiving push notifications when subscribed to the event bus 605 for configured event types or network segments. When accessing via the MCP server 615, the autonomous pentesting agent 105-b may formulate a query (e.g., "Get credentials for domain services"), the MCP server 615 may process the query and retrieve responsive information from the live vulnerability database 610, and the MCP server 615 may return contextualized results to the autonomous pentesting agent 105-b. Information retrieved from the live vulnerability database 610 may include credentials discovered by other agents, network assets within the scope of the autonomous pentesting agent 105-b that were discovered by other agents, vulnerabilities identified by other agents, or attack paths mapped by other agents.

The autonomous pentesting agent 105-b may execute a second pentesting operation using intelligence gathered by the autonomous pentesting agent 105-a during the first operation. As an example, the autonomous pentesting agent 105-b may retrieve a credential from the live vulnerability database 610, may attempt authentication to a service using the credential, and may obtain unauthorized access to one or more network assets using the credentials discovered during the first pentesting operation.

The computing environment 600 may support concurrent operations by the autonomous pentesting agent 105-a, the autonomous pentesting agent 105-b, and the autonomous pentesting agent 105-c. For example, the autonomous pentesting agent 105-b may execute one or more third pentesting operations that at least partially overlap in time with the first pentesting operation executed by the autonomous pentesting agent 105-a. "At least partially overlapping" indicates that the third operations may begin, continue, or complete while the first operation is still executing. As described with reference to FIG. 4, the autonomous pentesting agents may write findings in real-time such that the central core 405-a and the central core 405-b may access real-time discoveries, enabling minimal delay between agents. The event bus 605 and the streaming ETL pipeline to the live vulnerability database 610 may enable concurrent agents to share discoveries.

In some examples, one pentesting operation may target a web application of the target network 110, while another pentesting operation targets a server hosting the web application. The autonomous pentesting agent 105-b may discover and test a web application from an external perspective, attempting exploitation techniques and publishing attempts and results to the event bus 605. The autonomous pentesting agent 105-a may compromise a server hosting the web application, accessing application logs and analyzing the attempts by the autonomous pentesting agent 105-b reflected in the logs. The autonomous pentesting agent 105-a may identify vulnerability details from error messages in the logs or may access source code files on the server. The autonomous pentesting agent 105-a may publish findings to the event bus 605, the findings may be transformed to the live vulnerability database 610, and the autonomous pentesting agent 105-b may access the live vulnerability database 610 via the MCP server 615 to retrieve the internal perspective findings. The autonomous pentesting agent 105-b may adjust exploitation techniques using the internal intelligence and may successfully compromise the web application from the external perspective.

As described with reference to FIG. 4, the autonomous pentesting agents may operate on different domains or network segments. The target network 110 may be divided into a first network segment associated with a first set of network assets and a second network segment associated with a second set of network assets that differs from the first set. The autonomous pentesting agent 105-a may execute a first pentesting operation on the first network segment of the target network 110, discovering and compromising assets within the first segment. The autonomous pentesting agent 105-b may execute a second pentesting operation on the second network segment of the target network 110. The autonomous pentesting agent 105-a may discover a credential (e.g., domain administrator credentials) during operations in the first segment and may publish the discovery to the event bus 605. The autonomous pentesting agent 105-b may access the live vulnerability database 610 and may retrieve the credential discovered in the first segment. The autonomous pentesting agent 105-b may test the credential against assets in the second segment and may obtain unauthorized access in the second segment using the cross-segment credential. The cross-segment coordination may reveal the effectiveness of network segmentation controls and may identify credential reuse vulnerabilities spanning network segments.

In some examples, a security vulnerability may be identified through the first pentesting operation. For example, the autonomous pentesting agent 105-a operating in an internal network segment may discover an externally exposed subdomain during enumeration. The autonomous pentesting agent 105-a may publish a subdomain discovery event to the event bus 605, and the central core 405-a may receive notification of the event. The central core 405-a may identify that the externally exposed subdomain represents a potential external attack vector. The computing environment 600 may prompt for authorization to execute a second pentesting operation targeting the identified security vulnerability via a user interface. As described with reference to FIG. 4, the autonomous pentesting platform may receive one or more user inputs authorizing pentesting operations, such as for external scans or operations outside an original scope of the pentest. One or more user inputs obtained via the user interface may authorize the second pentesting operation. After receiving authorization, the central core 405-a may deploy the autonomous pentesting agent 105-c to probe the subdomain. The autonomous pentesting agent 105-c may access the live vulnerability database 610 via the MCP server 615, may retrieve credential and subdomain details, and may execute the second pentesting operation using shared intelligence from internal operations.

An example scenario demonstrates the coordination enabled by the computing environment 600. A relatively large enterprise customer may have a network segmented into a first segment with 10,000 endpoints in an Engineering department, a second segment with 5,000 endpoints in a Finance department, and a third segment with public-facing web applications. The autonomous pentesting agent 105-a, the autonomous pentesting agent 105-b, and the autonomous pentesting agent 105-c may be deployed concurrently, with the autonomous pentesting agent 105-a assigned to the first segment, the autonomous pentesting agent 105-b assigned to the second segment, and the autonomous pentesting agent 105-c assigned to external testing of the third segment. The central core 405-a may coordinate operations using shared infrastructure including the event bus 605, the live vulnerability database 610, and the MCP server 615.

The autonomous pentesting agent 105-a may discover and compromise a host in the Engineering segment, then may discover a domain administrator credential on the compromised host. The autonomous pentesting agent 105-a may publish a credential discovery event to the event bus 605 in FIFO order. The streaming ETL pipeline may extract the event from the event bus 605, may transform the credential data, and may load the transformed credential into the live vulnerability database 610. The autonomous pentesting agent 105-b and the autonomous pentesting agent 105-c may receive push notifications indicating that a credential has been discovered, as both agents subscribed to credential discovery events on the event bus 605.

The autonomous pentesting agent 105-b may query the live vulnerability database 610 via the MCP server 615 for credentials applicable to domain services. The autonomous pentesting agent 105-b may retrieve the credential discovered by the autonomous pentesting agent 105-a in the different network segment. The autonomous pentesting agent 105-b may identify a Finance database server in the second segment and may execute a pentesting operation by attempting authentication to the service using the credential. The autonomous pentesting agent 105-b may successfully authenticate and may obtain unauthorized access to the Finance database.

The autonomous pentesting agent 105-a may continue enumeration operations and may discover an externally exposed subdomain. The central core 405-a may identify that the subdomain represents a security vulnerability and may prompt for user authorization via a portal interface. After receiving approval, the central core 405-a may instruct the autonomous pentesting agent 105-c to test the subdomain using the credential. The autonomous pentesting agent 105-c may access the live vulnerability database 610 via the MCP server 615, may retrieve the credential and subdomain details, may probe the subdomain, and may achieve compromise of the external subdomain.

This example demonstrates coordination enabled by the event-driven architecture. The event bus 605 may push notifications to subscribed agents rather than agents polling for updates. The streaming ETL may transform events in real-time. Agents may query the database using natural language through the MCP server 615. A single credential discovery in the first segment may enable compromises in the second segment and of an external subdomain. By comparison, a sequential single-agent approach would test segments serially with delays between discovery and utilization, while an uncoordinated multi-agent approach would have agents testing concurrently without sharing intelligence. The event-driven architecture of the computing environment 600 may enable concurrent testing with shared access to the event bus 605 and the live vulnerability database 610, with credential discoveries immediately available across segments.

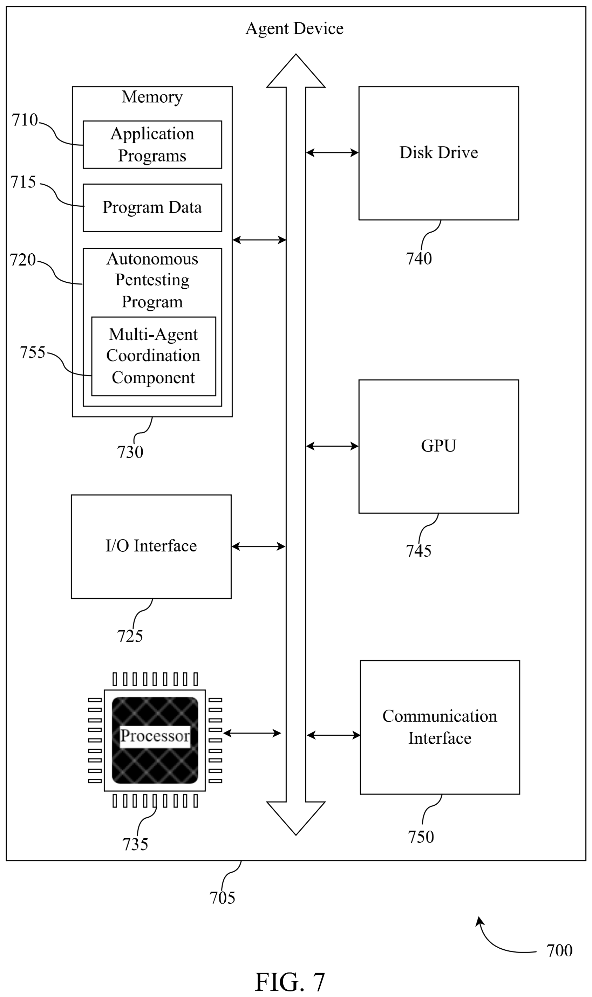

**FIG. 7** shows a diagram of a system 700 including an agent device 705 that supports multi-agent coordination in autonomous pentesting in accordance with aspects of the present disclosure. The agent device 705 may be an example of a device or server on which an autonomous pentesting agent 105 is deployed as described herein. The agent device 705 may include components for multi-agent coordination in autonomous pentesting, such as a memory 730 including application programs 710, program data 715, an autonomous pentesting program 720, and a multi-agent coordination component 755; an input/output (I/O) interface 725; a processor 735; a disk drive 740; a graphics processing unit (GPU) 745; and a communication interface 750. Each of these components may communicate, directly or indirectly, with one another (e.g., via one or more buses, communications links, communications interfaces, or any combination thereof).

The I/O interface 725 may support connection of the agent device 705 with one or more other devices. For example, the agent device 705 may connect to keyboards, mice, printers, hard disks, or the like via the I/O interface 725. The I/O interface 725 may communicate with the processor 735. That is, the processor 735 may process signals from devices connected to the agent device 705 via the I/O interface 725.

Memory 730 may include RAM, ROM, or both. The memory 730 may store computer-readable, computer-executable software including instructions that, when executed, cause at least one processor 735 to perform various functions described herein, such as functions supporting multi-agent coordination in autonomous pentesting. In some cases, the memory 730 may contain, among other things, a basic input/output system (BIOS), which may control basic hardware or software operation such as the interaction with peripheral components or devices. The memory 730 may be an example of a single memory or multiple memories. For example, the agent device 705 may include one or more memories 730.

The application programs 710 in the memory 730 may be examples of app(s) 140 as described with reference to FIG. 1. For example, the application programs 710 may be installed on the memory 730 of the agent device 705, among other devices in a network. The application programs 710 may be examples of software applications or computer programs that are implemented to carry out one or more functions or tasks.

The program data 715 may be data related to the application programs 710. Program data 715 may be an example of or refer to running data of programs and applications installed on the memory 730 of the agent device 705. In some examples, the program data 715 may include various data, including code that allows the application programs 710 to perform the one or more functions or tasks.

The processor 735 may include an intelligent hardware device, (e.g., a general-purpose processor, a digital signal processor (DSP), a CPU, a microcontroller, an applicationspecific integrated circuit (ASIC), a field programmable gate array (FPGA), a programmable logic device, a discrete gate or transistor logic component, a discrete hardware component, or any combination thereof). The processor 735 may be configured to execute computer-readable instructions stored in at least one memory 730 to perform various functions (e.g., functions or tasks supporting multi-agent coordination in autonomous pentesting). Though a single processor 735 is depicted in the example of FIG. 7, it is to be understood that the system 700 may include any quantity of one or more of processors 735 and that a group of processors 735 may collectively perform one or more functions ascribed herein to a processor, such as the processor 735. The processor 735 may be an example of a single processor or multiple processors. For example, the agent device 705 may include one or more processors 735.

The disk drive 740 may be configured to store data that is generated, processed, stored, or otherwise used by the system 700. In some cases, the disk drive 740 may include one or more hard disk drives (HDDs), one or more solid-state drives (SSDs), or both. In some examples, the disk drive 740 may be an example of a single database, a distributed database, multiple distributed databases, a data store, a data lake, or an emergency backup database. In some examples, the disk drive 740 may be an example of one or more components described with reference to FIG. 1.

GPU 745 may be configured to store graphics-related data. The GPU 745 may store and manage data related to graphics and video processing. In some examples, the GPU 745 may be an example of or a component of a graphics card. The GPU 745 may use components of the memory 730, including the RAM, for temporary storage. For example, the GPU 745 may move data from the RAM of the memory 730 to the GPU 745 for graphics and video processing.

The communication interface 750 may enable the agent device 705 to exchange information (e.g., input information, output information, or both) with other systems or devices (not shown). For example, the communication interface 750 may enable the agent device 705 to connect to a network (e.g., a target network 110 as described herein). The communication interface 750 may include one or more wireless network interfaces, one or more wired network interfaces, or any combination thereof.

The autonomous pentesting program 720 may be an example of a program of an autonomous pentesting service that is installed on the memory 730 of the agent device 705. The autonomous pentesting program 720 may execute an autonomous pentest of a network accessed by the agent device 705, such as accessed via the communication interface 750. That is, the autonomous pentesting program 720 may be configured to perform an autonomous pentest as described herein, including an autonomous pentest involving autonomous pentesting of a network.

The multi-agent coordination component 755 may support autonomous pentesting of a network in accordance with examples as disclosed herein. For example, the multi-agent coordination component 755 may be configured as or otherwise support a means for executing, by a first autonomous pentesting agent of multiple autonomous pentesting agents, one or more first autonomous pentesting operations during an autonomous pentest of the network. The multi-agent coordination component 755 may be configured as or otherwise support a means for executing, by a second autonomous pentesting agent of the multiple autonomous pentesting agents and at least partially overlapping in time with the one or more first autonomous pentesting operations, one or more second autonomous pentesting operations during the autonomous pentest of the network. The multi-agent coordination component 755 may be configured as or otherwise support a means for outputting, by the first autonomous pentesting agent and during the autonomous pentest of the network, network information obtained by the first autonomous pentesting agent from the one or more first autonomous pentesting operations. The multi-agent coordination component 755 may be configured as or otherwise support a means for executing, by the second autonomous pentesting agent and during the autonomous pentest, one or more third autonomous pentesting operations that are based on the network information.

Additionally, or alternatively, the multi-agent coordination component 755 may be configured as or otherwise support a means for executing, by a first pentesting agent of multiple pentesting agents, a first pentesting operation during a pentest of a target network; publishing, by the first pentesting agent, one or more pentesting events associated with the first pentesting operation to an event bus in a FIFO ordering that is specific to the pentest; transforming the one or more pentesting events published to the event bus in real-time to a live vulnerability database; and executing, by a second pentesting agent of the multiple pentesting agents and during the pentest, a second pentesting operation that is based on accessing the live vulnerability database.

By including or configuring the multi-agent coordination component 755 in accordance with examples as described herein, the agent device 705 may support techniques for improved network security.

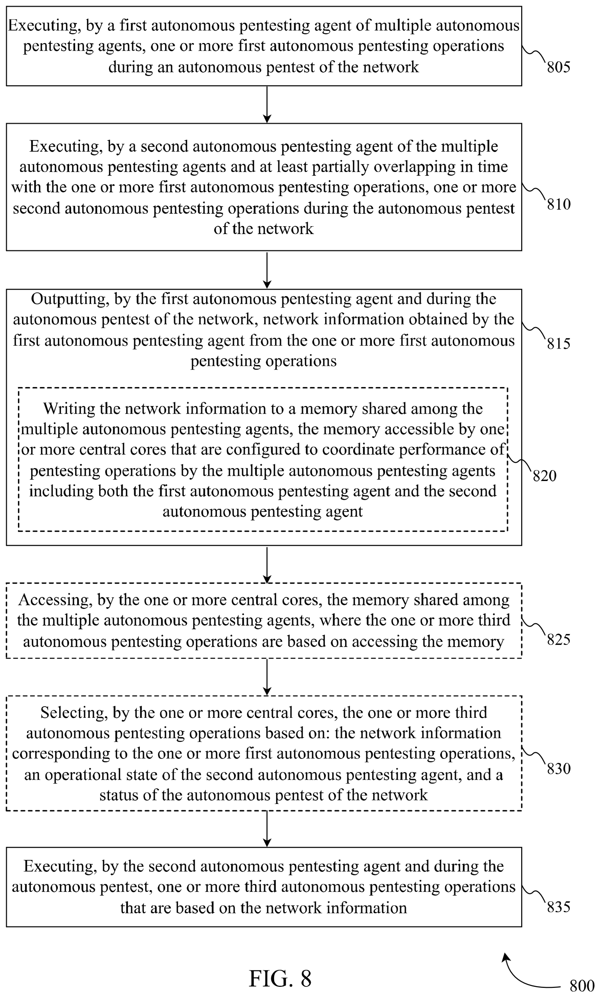

**FIG. 8** shows a flowchart illustrating a method 800 that supports multi-agent coordination in autonomous pentesting in accordance with aspects of the present disclosure. The operations of the method 800 may be implemented by an agent device 705 or its components as described herein. In some examples, an agent device may execute a set of instructions to control the functional elements of the agent device to perform the described functions. Additionally, or alternatively, the agent device may perform aspects of the described functions using special-purpose hardware.

At 805, the method 800 may include executing, by a first autonomous pentesting agent of multiple autonomous pentesting agents, one or more first autonomous pentesting operations during an autonomous pentest of the network.

At 810, the method 800 may include executing, by a second autonomous pentesting agent of the multiple autonomous pentesting agents and at least partially overlapping in time with the one or more first autonomous pentesting operations, one or more second autonomous pentesting operations during the autonomous pentest of the network.

At 815, the method may include outputting, by the first autonomous pentesting agent and during the autonomous pentest of the network, network information obtained by the first autonomous pentesting agent from the one or more first autonomous pentesting operations.

In some examples, at 820, outputting the network information may include writing the network information to a memory shared among the multiple autonomous pentesting agents, the memory accessible by one or more central cores that are configured to coordinate performance of pentesting operations by the multiple autonomous pentesting agents including both the first autonomous pentesting agent and the second autonomous pentesting agent.

At 825, the method 800 may include accessing, by the one or more central cores, the memory shared among the multiple autonomous pentesting agents, where the one or more third autonomous pentesting operations are based on accessing the memory.

At 830, the method 800 may include selecting, by the one or more central cores, the one or more third autonomous pentesting operations based on: the network information corresponding to the one or more first autonomous pentesting operations, an operational state of the second autonomous pentesting agent, and a status of the autonomous pentest of the network.

At 835, the method 800 may include executing, by the second autonomous pentesting agent and during the autonomous pentest, one or more third autonomous pentesting operations that are based on the network information.

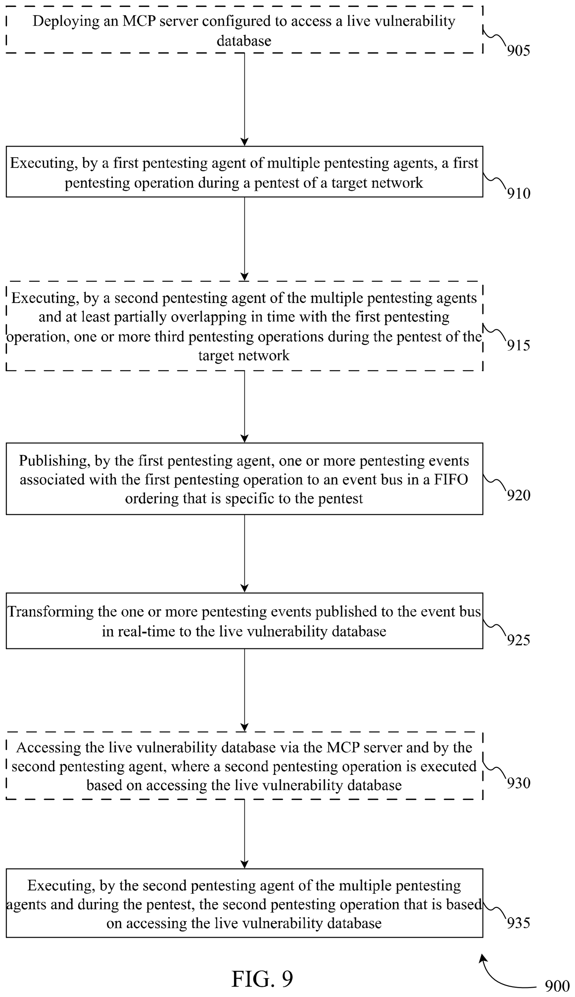

**FIG. 9** shows a flowchart illustrating a method 900 that supports multi-agent coordination in autonomous pentesting in accordance with aspects of the present disclosure. The operations of the method 900 may be implemented by an agent device 705 or its components as described herein. In some examples, an agent device may execute a set of instructions to control the functional elements of the agent device to perform the described functions. Additionally, or alternatively, the agent device may perform aspects of the described functions using special-purpose hardware.

In some examples, at 905, the method 900 may include deploying an MCP server configured to access a live vulnerability database.

At 910, the method 900 may include executing, by a first pentesting agent of multiple pentesting agents, a first pentesting operation during a pentest of a target network.

In some examples, at 915, the method 900 may include executing, by a second pentesting agent of the multiple pentesting agents and at least partially overlapping in time with the first pentesting operation, one or more third pentesting operations during the pentest of the target network.

At 920, the method 900 may include publishing, by the first pentesting agent, one or more pentesting events associated with the first pentesting operation to an event bus in a FIFO ordering that is specific to the pentest.

At 925, the method 900 may include transforming the one or more pentesting events published to the event bus in real-time to the live vulnerability database.

In some examples, at 930, the method 900 may include accessing the live vulnerability database via the MCP server and by the second pentesting agent, where a second pentesting operation is executed based on accessing the live vulnerability database.

At 935, the method 900 may include executing, by the second pentesting agent of the multiple pentesting agents and during the pentest, the second pentesting operation that is based on accessing the live vulnerability database.

The following provides an overview of aspects of the present disclosure:
Aspect 1: A method for autonomous pentesting of a network, comprising: executing, by a first autonomous pentesting agent of a plurality of autonomous pentesting agents, one or more first autonomous pentesting operations during an autonomous pentest of the network; executing, by a second autonomous pentesting agent of the plurality of autonomous pentesting agents and at least partially overlapping in time with the one or more first autonomous pentesting operations, one or more second autonomous pentesting operations during the autonomous pentest of the network; outputting, by the first autonomous pentesting agent and during the autonomous pentest of the network, network information obtained by the first autonomous pentesting agent from the one or more first autonomous pentesting operations; and executing, by the second autonomous pentesting agent and during the autonomous pentest, one or more third autonomous pentesting operations that are based on the network information.
Aspect 2: The method of aspect 1, wherein outputting the network information comprises: writing the network information to a memory shared among the plurality of autonomous pentesting agents, the memory accessible by one or more central cores that are configured to coordinate performance of pentesting operations by the plurality of autonomous pentesting agents including both the first autonomous pentesting agent and the second autonomous pentesting agent.
Aspect 3: The method of aspect 2, further comprising: accessing, by the one or more central cores, the memory shared among the plurality of autonomous pentesting agents, wherein the one or more third autonomous pentesting operations are based at least in part on accessing the memory.
Aspect 4: The method of any of aspects 1 through 3, further comprising: selecting, by one or more central cores that are configured to coordinate performance of pentesting operations by the plurality of autonomous pentesting agents, the one or more third autonomous pentesting operations based at least in part on: the network information corresponding to the one or more first autonomous pentesting operations, an operational state of the second autonomous pentesting agent, and a status of the autonomous pentest of the network.
Aspect 5: The method of aspect 4, further comprising: obtaining credentials associated with a user of the network in accordance with the one or more first autonomous pentesting operations; and compromising, by the second autonomous pentesting agent, one or more network assets using the credentials in accordance with executing the one or more third autonomous pentesting operations.
Aspect 6: The method of any of aspects 1 through 5, further comprising: receiving, by the second autonomous pentesting agent and from one or more central cores configured to coordinate performance of pentesting operations by the first autonomous pentesting agent and the second autonomous pentesting agent, an instruction to execute the one or more third autonomous pentesting operations based at least in part on the network information corresponding to the one or more first autonomous pentesting operations.
Aspect 7: The method of any of aspects 1 through 6, further comprising: coordinating, by a central core, performance of pentesting operations by the first autonomous pentesting agent and the second autonomous pentesting agent during the autonomous pentest.
Aspect 8: The method of aspect 7, further comprising: terminating a fourth autonomous pentesting operation executed by the first autonomous pentesting agent, wherein the fourth autonomous pentesting operation targets a same network asset as at least one autonomous pentesting operation of the one or more second autonomous pentesting operations.
Aspect 9: The method of any of aspects 7 through 8, wherein coordinating comprises: determining, via the central core, to trigger the one or more third autonomous pentesting operations via the second autonomous pentesting agent based at least in part on the network information corresponding to the one or more first autonomous pentesting operations executed via the first autonomous pentesting agent.
Aspect 10: The method of aspect 9, wherein the one or more third autonomous pentesting operations replace one or more projected autonomous pentesting operations based at least in part on the one or more projected autonomous pentesting operations being associated with a network asset targeted by the one or more first autonomous pentesting operations executed by the first autonomous pentesting agent.
Aspect 11: The method of any of aspects 1 through 10, further comprising: sending, by a first central core associated with the first autonomous pentesting agent and to a second central core associated with the second autonomous pentesting agent, an instruction to execute the one or more third autonomous pentesting operations after obtaining the network information from the one or more first autonomous pentesting operations.
Aspect 12: The method of any of aspects 1 through 11, further comprising: executing the one or more first autonomous pentesting operations by the first autonomous pentesting agent on a first domain of the network, the first domain associated with a first set of network assets of the network; and executing the one or more second autonomous pentesting operations and the one or more third autonomous pentesting operations by the second autonomous pentesting agent on a second domain of the network, the second domain associated with a second set of network assets of the network different than the first set of network assets.
Aspect 13: The method of any of aspects 1 through 12, further comprising: executing the one or more first autonomous pentesting operations by the first autonomous pentesting agent according to a first set of autonomous pentesting configuration parameters associated with the first autonomous pentesting agent; and executing the one or more second autonomous pentesting operations and the one or more third autonomous pentesting operations by the second autonomous pentesting agent according to a second set of autonomous pentesting configuration parameters associated with the second autonomous pentesting agent, wherein the second set of autonomous pentesting configuration parameters are different than the first set of autonomous pentesting configuration parameters.
Aspect 14: The method of any of aspects 1 through 13, further comprising: deploying, via a first central core, a second central core based at least in part on one or more of: the one or more first autonomous pentesting operations, the one or more second autonomous pentesting operations, or the one or more third autonomous pentesting operations, wherein: the second central core is configured to periodically synchronize with the first central core, and the first central core and the second central core are configured to coordinate performance of pentesting operations by the plurality of autonomous pentesting agents.
Aspect 15: The method of any of aspects 1 through 14, further comprising: executing an external scan of the network based at least in part on the one or more first autonomous pentesting operations, the one or more second autonomous pentesting operations, the one or more third autonomous pentesting operations, or any combination thereof.
Aspect 16: The method of aspect 15, further comprising: transmitting a recommendation to perform the external scan, wherein the external scan is executed after approval of the recommendation.
Aspect 17: The method of any of aspects 1 through 16, wherein the network information is output to a memory shared among the plurality of autonomous pentesting agents, and wherein the memory comprises one or more relational data stores, one or more graph data stores, or both, and wherein the memory comprises one or more credentials, one or more network paths, contextual data, or any combination thereof identified during one or more autonomous pentests of the network.
Aspect 18: An apparatus for autonomous pentesting of a network, comprising: one or more memories storing processor-executable code; and one or more processors coupled with the one or more memories and individually or collectively operable to execute the code to cause the apparatus to perform a method of any of aspects 1 through 17.
Aspect 19: A non-transitory computer-readable medium storing code for autonomous pentesting of a network, the code comprising instructions executable by one or more processors to perform a method of any of aspects 1 through 17.
Aspect 20: An apparatus for autonomous pentesting of a network, comprising at least one means for performing a method of any aspects 1 through 17.
Aspect 21: A method for pentesting, comprising: executing, by a first pentesting agent of a plurality of pentesting agents, a first pentesting operation during a pentest of a target network; publishing, by the first pentesting agent, one or more pentesting events associated with the first pentesting operation to an event bus in a FIFO ordering that is specific to the pentest; transforming the one or more pentesting events published to the event bus in real-time to a live vulnerability database; and executing, by a second pentesting agent of the plurality of pentesting agents and during the pentest, a second pentesting operation that is based at least in part on accessing the live vulnerability database.
Aspect 22: The method of aspect 21, further comprising: executing, by the second pentesting agent of the plurality of pentesting agents and at least partially overlapping in time with the first pentesting operation, one or more third pentesting operations during the pentest of the target network.
Aspect 23: The method of any of aspects 21 through 22, further comprising: deploying a MCP server configured to access the live vulnerability database; and accessing the live vulnerability database via the MCP server and by the second pentesting agent, wherein the second pentesting operation is executed based at least in part on accessing the live vulnerability database.
Aspect 24: The method of any of aspects 21 through 23, further comprising: receiving, by the second pentesting agent, an indication of the one or more pentesting events published to the event bus in accordance with the second pentesting agent being subscribed to events associated with the pentest of the target network.
Aspect 25: The method of any of aspects 21 through 24, further comprising: performing a second pentest by a second plurality of pentesting agents, wherein the second pentest at least partially overlaps with the pentest, and wherein performing the second pentest comprises: executing at least one third pentesting operation that is based at least in part on accessing the live vulnerability database and on the one or more pentesting events associated with the first pentesting operation of the pentest.
Aspect 26: The method of any of aspects 21 through 25, wherein one of the first pentesting operation or the second pentesting operation targets a web application of the target network, and wherein an other of the first pentesting operation or the second pentesting operation targets a server hosting the web application of the target network.
Aspect 27: The method of any of aspects 21 through 26, wherein the event bus is specific to the target network.
Aspect 28: The method of any of aspects 21 through 27, further comprising: identifying a security vulnerability based at least in part on the first pentesting operation; and prompting, via a user interface, authorization to execute the second pentesting operation, wherein: the second pentesting operation targets the security vulnerability, and one or more user inputs obtained via the user interface authorize the second pentesting operation.
Aspect 29: The method of any of aspects 21 through 28, further comprising: selecting, by one or more central cores that are configured to coordinate performance of pentesting operations by the plurality of pentesting agents, the second pentesting operation based at least in part on one or more of: network information corresponding to the first pentesting operation, an operational state of the second pentesting agent, and a status of the pentest of the target network.
Aspect 30: The method of any of aspects 21 through 29, further comprising: obtaining credentials associated with a user of the target network in accordance with the first pentesting operation; and obtaining, by the second pentesting agent, unauthorized access to one or more network assets using the credentials in accordance with executing the second pentesting operation.
Aspect 31: The method of any of aspects 21 through 30, further comprising: executing the first pentesting operation by the first pentesting agent on a first network segment of the target network, the first network segment associated with a first set of network assets of the target network; and executing the second pentesting operation by the second pentesting agent on a second network segment of the target network, the second network segment associated with a second set of network assets of the target network different than the first set of network assets.
Aspect 32: An apparatus for pentesting, comprising: one or more memories storing processor-executable code; and one or more processors coupled with the one or more memories and individually or collectively operable to execute the code to cause the apparatus to perform a method of any of aspects 21 through 31.
Aspect 33: A non-transitory computer-readable medium storing code for pentesting, the code comprising instructions executable by one or more processors to perform a method of any of aspects 21 through 31.
Aspect 34: An apparatus for pentesting, comprising at least one means for performing a method of any aspects 21 through 31.

It should be noted that these methods describe examples of implementations, and that the operations and the steps may be rearranged or otherwise modified such that other implementations are possible. In some examples, aspects from two or more of the methods may be combined. For example, aspects of each of the methods may include steps or aspects of the other methods, or other steps or techniques described herein.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

Information and signals described herein may be represented using any of a variety of different technologies and techniques. For example, data, instructions, commands, information, signals, bits, and symbols that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration). The functions of each unit may also be implemented, in whole or in part, with instructions embodied in a memory, formatted to be executed by one or more general or applicationspecific processors.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable ROM (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

As used herein, including in the claims, the article "a" before a noun is openended and understood to refer to "at least one" of those nouns or "one or more" of those nouns. Thus, the terms "a," "at least one," "one or more," "at least one of one or more" may be interchangeable. For example, if a claim recites "a component" that performs one or more functions, each of the individual functions may be performed by a single component or by any combination of multiple components. Thus, the term "a component" having characteristics or performing functions may refer to "at least one of one or more components" having a particular characteristic or performing a particular function. Subsequent reference to a component introduced with the article "a" using the terms "the" or "said" may refer to any or all of the one or more components. For example, a component introduced with the article "a" may be understood to mean "one or more components," and referring to "the component" subsequently in the claims may be understood to be equivalent to referring to "at least one of the one or more components."

In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

## Claims

1. A method (800) for autonomous pentesting of a network (110), comprising:
executing (805), by a first autonomous pentesting agent (105-a) of a plurality of autonomous pentesting agents (105-a~105-c), one or more first autonomous pentesting operations during an autonomous pentest of the network (110);
executing (810), by a second autonomous pentesting agent (105-b) of the plurality of autonomous pentesting agents (105-a~105-c) and at least partially overlapping in time with the one or more first autonomous pentesting operations, one or more second autonomous pentesting operations during the autonomous pentest of the network (110);
outputting (815), by the first autonomous pentesting agent (105-a) and during the autonomous pentest of the network (110), network information obtained by the first autonomous pentesting agent (105-a) from the one or more first autonomous pentesting operations; and
executing (835), by the second autonomous pentesting agent (105-b) and during the autonomous pentest, one or more third autonomous pentesting operations that are based on the network information.

2. The method (800) of claim 1, wherein outputting (815) the network information comprises:
writing (820) the network information to a memory (410) shared among the plurality of autonomous pentesting agents (105-a~105-c), the memory (410) accessible by one or more central cores (405-a, 405-b) that are configured to coordinate performance of pentesting operations by the plurality of autonomous pentesting agents (105-a~105-c) including both the first autonomous pentesting agent (105-a) and the second autonomous pentesting agent (105-b); and
accessing (825), by the one or more central cores (405-a, 405-b), the memory (410) shared among the plurality of autonomous pentesting agents (105-a~105-c), wherein the one or more third autonomous pentesting operations are based at least in part on accessing the memory (410).

3. The method (800) of claim 1, further comprising:
selecting (830), by one or more central cores (405-a, 405-b) that are configured to coordinate performance of pentesting operations by the plurality of autonomous pentesting agents (105-a~105-c), the one or more third autonomous pentesting operations based at least in part on: the network information corresponding to the one or more first autonomous pentesting operations, an operational state of the second autonomous pentesting agent (105-b), and a status of the autonomous pentest of the network (110).

4. The method (800) of claim 3, further comprising:
obtaining credentials associated with a user of the network (110) in accordance with the one or more first autonomous pentesting operations; and
compromising, by the second autonomous pentesting agent (105-b), one or more network assets using the credentials in accordance with executing the one or more third autonomous pentesting operations.

5. The method (800) of claim 1, further comprising:
receiving, by the second autonomous pentesting agent (105-b) and from one or more central cores configured to coordinate performance of pentesting operations by the first autonomous pentesting agent (105-a) and the second autonomous pentesting agent (105-b), an instruction to execute the one or more third autonomous pentesting operations based at least in part on the network information corresponding to the one or more first autonomous pentesting operations.

6. The method (800) of claim 1, further comprising:
coordinating, by a central core (405-a), performance of pentesting operations by the first autonomous pentesting agent (105-a) and the second autonomous pentesting agent (105-b) during the autonomous pentest.

7. The method (800) of claim 6, further comprising:
terminating a fourth autonomous pentesting operation executed by the first autonomous pentesting agent (105-a), wherein the fourth autonomous pentesting operation targets a same network asset as at least one autonomous pentesting operation of the one or more second autonomous pentesting operations.

8. The method (800) of claim 6, wherein coordinating comprises:
determining, via the central core (405-a), to trigger the one or more third autonomous pentesting operations via the second autonomous pentesting agent (105-b) based at least in part on the network information corresponding to the one or more first autonomous pentesting operations executed via the first autonomous pentesting agent (105-a), wherein the one or more third autonomous pentesting operations replace one or more projected autonomous pentesting operations based at least in part on the one or more projected autonomous pentesting operations being associated with a network asset targeted by the one or more first autonomous pentesting operations executed by the first autonomous pentesting agent (105-a).

9. The method (800) of claim 1, further comprising:
sending, by a first central core associated with the first autonomous pentesting agent (105-a) and to a second central core associated with the second autonomous pentesting agent (105-b), an instruction to execute the one or more third autonomous pentesting operations after obtaining the network information from the one or more first autonomous pentesting operations.

10. The method (800) of claim 1, further comprising:
executing the one or more first autonomous pentesting operations by the first autonomous pentesting agent (105-a) on a first domain of the network (110), the first domain associated with a first set of network assets of the network (110); and
executing the one or more second autonomous pentesting operations and the one or more third autonomous pentesting operations by the second autonomous pentesting agent (105-b) on a second domain of the network (110), the second domain associated with a second set of network assets of the network (110) different than the first set of network assets.

11. The method (800) of claim 1, further comprising:
executing the one or more first autonomous pentesting operations by the first autonomous pentesting agent (105-a) according to a first set of autonomous pentesting configuration parameters associated with the first autonomous pentesting agent (105-a); and
executing the one or more second autonomous pentesting operations and the one or more third autonomous pentesting operations by the second autonomous pentesting agent (105-b) according to a second set of autonomous pentesting configuration parameters associated with the second autonomous pentesting agent (105-b), wherein the second set of autonomous pentesting configuration parameters are different than the first set of autonomous pentesting configuration parameters.

12. The method (800) of claim 1, further comprising:
deploying, via a first central core, a second central core based at least in part on one or more of: the one or more first autonomous pentesting operations, the one or more second autonomous pentesting operations, or the one or more third autonomous pentesting operations, wherein:
the second central core is configured to periodically synchronize with the first central core, and
the first central core and the second central core are configured to coordinate performance of pentesting operations by the plurality of autonomous pentesting agents (105-a~105-c).

13. The method (800) of claim 1, further comprising:
executing an external scan of the network (110) based at least in part on the one or more first autonomous pentesting operations, the one or more second autonomous pentesting operations, the one or more third autonomous pentesting operations, or any combination thereof.

14. The method (800) of claim 13, further comprising:
transmitting a recommendation to perform the external scan, wherein the external scan is executed after approval of the recommendation.

15. The method (800) of claim 1, wherein the network information is output to a memory (410) shared among the plurality of autonomous pentesting agents (105-a~105-c), and wherein the memory (410) comprises one or more relational data stores, one or more graph data stores, or both, and wherein the memory (410) comprises one or more credentials, one or more network paths, contextual data, or any combination thereof identified during one or more autonomous pentests of the network (110).
